# EUROPEAN PATENT SPECIFICATION

(11) **EP 2 770 031 B1**
(45) Date of publication and mention of the grant of the patent: **06.09.2017**
(21) Application number: 12841291.3
(22) Date of filing: 17.10.2012
(51) Int. Cl.: C09J 7/02, B32B 5/18, B32B 27/00, B32B 27/10, B65C 9/22, G09F 3/10, B32B 27/08, B32B 27/18, B32B 27/32, B65C 9/30, C08K 9/04, C08K 3/26, G09F 3/02, B32B 7/12

(54) **WATER-ACTIVATED SHEET, WATER-ACTIVATED LABEL USING SAID SHEET, PRODUCTION METHOD FOR SAID LABEL, LABEL ADHERING DEVICE USING SAID LABEL, AND ADHEREND FOR SAID LABEL**
WASSERAKTIVIERTE FOLIE, WASSERAKTIVIERTES ETIKETT MIT DIESER FOLIE, HERSTELLUNGSVERFAHREN FÜR DAS ETIKETT, ETIKETTKLEBEVORRICHTUNG MIT DIESEM ETIKETT UND HAFTSTOFF FÜR DIESES ETIKETT
FEUILLE ACTIVÉE PAR EAU, ÉTIQUETTE ACTIVÉE PAR EAU UTILISANT LADITE FEUILLE, PROCÉDÉ DE PRODUCTION DE LADITE ÉTIQUETTE, DISPOSITIF D'ADHÉSION D'ÉTIQUETTE UTILISANT LADITE ÉTIQUETTE ET PARTIE ADHÉRÉE POUR LADITE ÉTIQUETTE

(30) Priority: 19.10.2011 JP 2011229594
(43) Date of publication of application: 27.08.2014
(73) Proprietor: Yupo Corporation, Tokyo 101-0062 (JP)
(72) Inventor: UMEDA Shigeyoshi, Hakusan-shi Ishikawa 924-0011 (JP); TAMAUCHI Hiromitsu, Kamisu-shi Ibaraki 314-0102 (JP); KIMURA Kazuyuki, Kamisu-shi Ibaraki 314-0102 (JP); YAMASHITA Kyoichi, Yokohama-shi Kanagawa 223-0052 (JP)
(74) Representative: Zimmermann & Partner Patentanwälte mbB
(86) International application number: PCT/JP2012/076808
(87) International publication number: WO 2013/058273

(56) References cited:
- EP-A1- 1 967 458
- EP-A1- 2 100 724
- EP-A1- 2 348 084
- WO-A1-2009/024357
- WO-A2-2007/133524
- JP-A- H0 640 445
- JP-A- S55 152 774
- JP-A- 2004 347 658
- JP-A- 2004 347 658
- JP-A- 2008 533 511

## Description

### Technical Field

The present invention relates to a water activatable sheet having an adhesive layer provided in advance that is capable of being activated and applied by supplying water thereto.

The invention also relates to a label that contains the sheet and is used for displaying a content of a container or the like. The invention particularly relates to a water activatable label that requires less labor on applying the label, suffers less wrinkles of a paper material and less effusion of an adhesive due to dew condensation on using the label, is capable of being easily stripped off on stripping the label after recovering a container, suffers less amount of an adhesive remaining on a container, and causes less contamination of cleaning water.

### Background Art

As a label for returnable bottles (such as glass bottles) used for transporting refreshing beverages and alcoholic beverages, a so-called glue label has been frequently used, which contains a paper material formed of pulp paper having a glue adhesive (an aqueous adhesive) coated thereto and being applied to a bottle. However, in summer or under the high temperature and high humidity climate in Kyushu and Okinawa regions in recent years, a paper label applied to a commercial item may suffer wrinkles and effusion of an adhesive due to dew condensation, and the item may be returned due to a defective appearance occurring after shipping in some cases.

A glue label is applied to a bottle in a bottler, such as a beverage manufacturer or a brewing company, in most cases. However, a label applicator including a glue adhesive requires a skill on setting up, and much labor may be required for maintenance of the applicator and storage, disposal and the like of the glue adhesive after use since the adhesive is liable to get moldy after use.

Furthermore, the current glue label has problems that much adhesive deposits may remain after washing a returned bottle for stripping off the label from the bottle, and the stripped label forms sludge, which contaminates cleaning water.

As an alternative technology of the ordinary glue label, a pressure-sensitive adhesive label and a heat-sensitive adhesive label having an adhesive provided in advance (a delayed label, described, for example, in PATENT DOCUMENTS 1 to 6) are exemplified, but the adhesive label has problems that a large amount of release paper is formed as a waste material on applying the label to a bottle, and the label may not be separated from the returned bottle only by washing the bottle. The heat-sensitive adhesive label requires temperature management on transportation and storage, and may cause a problem that the label cannot be used when a rolled label or a bundle of punched labels is blocked under a high temperature environment in summer. Furthermore, there is a problem that the label is necessarily heated again for stripping off the label from a returned bottle, and there is a difficulty on removing completely the adhesive remaining on the bottle, as similar to the adhesive label.

### Citation List

### Patent Documents

PATENT DOCUMENT 1: JP-B 5-18433
PATENT DOCUMENT 2: JP-A 1-22290
PATENT DOCUMENT 3: JP-A 6-100847
PATENT DOCUMENT 4: JP-A 6-100848
PATENT DOCUMENT 5: JP-A 7-319390
PATENT DOCUMENT 6: JP-A 8-76690

EP 2 100 724 A1 relates to a paper seal comprising a stretched thermoplastic resin film that comprises (a) a surface layer, (b) a substrate layer, and (c) a water-based adhesive-receiving layer having a water absorption level of from 2 to 25 ml/m ², wherein the stretched thermoplastic resin film has a porosity of from 20 to 50% and a 120° -opening time by bending repulsion of from 20 to 70 seconds. The paper seal can be stuck in a flat state without being curled by the environmental influence during labeling or by the influence of seasonal variation, and can be peeled off completely. EP 1 967 458 A1 relates to a surrounding label wherein the back side of an ending part can be superposed on and bonded with a water-based adhesive to the front side of a beginning part, the back side of the surrounding label has a water absorption of from 1 to 30 ml/m², the surrounding label has an Elmendorf tear strength, as measured in either of the winding direction of the label or the direction perpendicular to that direction, of from 8 to 50 gF, and the label contains a thermoplastic resin. JP 2004 347658 A relates to a delabelable label containing at least one of a thermoplastic resin A, inorganic fine powders B, and an organic filler B' , and an aqueous adhesive layer is provided on at least one side face of a base material film with a liquid absorption coefficient of 5 ml/ (m²ms^{1/2}) or more.

WO2005073331 discloses a process for applying a polymeric label to a container using a water activatable label produced by applying a layer of a hydrophilic solid material comprising at least 30% by dry weight of an animal glue to a polymeric label and thereafter drying said layer of hydrophilic material to form a water activatable hydrophilic layer that can be activated into a tacky fastenable adhesive. The coating amount of dried animal glue can be 0.02 g to 0.7 g/cm2 of the dried hydrophilic solid material. The polymeric label is preferably porous.

### Summary of Invention

### Technical Problem

An object of the invention is to provide a label and a sheet constituting the label that are based on the ordinary glue label and are capable of addressing the problems of the ordinary products, i.e., the wrinkles of a label and the effusion of an adhesive in the glue label due to dew condensation, the labor on applying the label, and the adhesive deposits on an adherend and the contamination of cleaning water on stripping off the label.

### Solution to Problem

As a result of earnest investigations made by the inventors, it has been found that the problem may be addressed by a water activatable sheet shown below and as defined in claim 1.
(1) A water activatable sheet containing a paper material having on at least one surface thereof a porous water absorbing layer that has a liquid absorption volume of from 1 to 10 mL/m², further having provided on the water absorbing layer an adhesive layer containing an aqueous adhesive coated and solidified by drying, wherein the adhesive layer is provided to have a thickness of from 0.1 to 30 g/m² on the water absorbing layer.
(2) The water activatable sheet according to the item (1), wherein the water absorbing layer contains a resin stretched film that contains a thermoplastic resin and inorganic fine powder having a hydrophilized surface, and is rendered porous by stretching.
(3) The water activatable sheet according to the item (1) or (2), wherein the water absorbing layer contains a resin stretched film that contains from 30 to 80% by weight of a polyolefin resin and from 20 to 70% by weight of calcium carbonate powder having an average particle diameter of from 0.1 to 2 µm having a surface that is hydrophilized with a cationic surfactant, and is rendered porous by stretching at a temperature that is lower than a melting point of the polyolefin resin.
(4) The water activatable sheet according to the item (3), wherein the cationic surfactant is a cationic vinyl copolymer obtained by copolymerization of an amine salt containing at least one of a diallylamine salt and an alkyldiallylamine salt and a hydrophilic vinyl monomer.
(5) The water activatable sheet according to any one of the items (2) to (4), wherein the water absorbing layer further contains an acid modified polyolefin resin.
(6) The water activatable sheet according to any one of the items (1) to (5), wherein the water absorbing layer has a porosity of from 20 to 55% and a thickness of from 1 to 10 µm.
(7) The water activatable sheet according to any one of the items (1) to (6), wherein the aqueous adhesive contains at least one kind selected from the group consisting of starch and a derivative thereof, pullulan, glue, gelatin, casein, methyl cellulose, carboxymethyl cellulose, gum arabic, traganth gum, guar gum, sodium alginate, polyvinyl alcohol, polyvinyl ether, polyvinyl pyrrolidone, polyacrylic acid and a salt thereof, polyacrylic acid amide, polyacrylate ester, water soluble polyurethane, and an ethylene-vinyl acetate resin.
(8) The water activatable sheet according to any one of the items (1) to (7), wherein the adhesive layer is provided to have a thickness of from 1 to 25 g/m² on the water absorbing layer.
(9) The water activatable sheet according to any one of the items (1) to (8), wherein the adhesive layer is provided in a pattern having an area ratio of from 30 to 95% on the water absorbing layer.
(10) The water activatable sheet according to the item (9), wherein the adhesive layer is provided in a pattern selected from dots, stripes, a lattice and a checkerboard on the water absorbing layer.
(11) The water activatable sheet according to any one of the items (1) to (10), wherein the paper material contains a multilayer stretched resin film.
(12) The water activatable sheet according to any one of the items (1) to (11), wherein the paper material has on one surface thereof the porous water absorbing layer and on the other surface thereof a printable layer, and the printable layer has printing thereon.
(13) The water activatable sheet according to any one of the items (1) to (12), wherein the water absorbing layer on the paper material has printing thereon, and the adhesive layer contains the aqueous adhesive coated and solidified by drying on the printing.
(14) The water activatable sheet according to the item (12) or (13), wherein the printing is selected from UV seal printing, UV flexographic printing, UV rotary offset printing, UV screen printing and UV ink-jet printing.
(15) The water activatable sheet according to the item (12), which further contains a release varnish layer provided on the printing.
(16) The water activatable sheet according to any one of the items (1) to (15), which is a label to be applied to an adherend.
(17) The water activatable label according to the item (16), wherein the adherend is selected from the group consisting of a glass bottle, a pottery or porceline bottle, a plastic container and a metal container.
(18) A method for producing the water activatable sheet of the item (12), containing: printing on the printable layer of the paper material having on one surface thereof the porous water absorbing layer and on the other surface thereof a printable layer; and within a process of printing, coating and solidifying by drying an aqueous adhesive on the water absorbing layer of the paper material to provide the adhesive layer.
(19) A water activatable label applying apparatus that supplies water to the adhesive layer of the water activatable label of the item (16) or (17) to reactivate the adhesive layer, and then applies the label to the adherend.
(20) The water activatable label applying apparatus according to the item (19), wherein the label applying apparatus contains at least a rotary driven applying drum and a water supplying unit, the applying drum sucks and holds the water activatable label, which has been supplied to a prescribed position of the applying drum, in a state where the adhesive layer thereof is directed outward, and then conveys the water activatable label to a position on the water supplying unit through rotation of the drum, the water supplying unit supplies water to the adhesive layer to reactivate the adhesive layer, and the applying drum conveys the water activatable label to the adherend through rotation of the drum, and presses the water activatable label onto the adherend and simultaneously terminates the suction, thereby applying the water activatable label to the adherend.
(21) The water activatable label applying apparatus according to the item (20), wherein the label applying apparatus further contains a label magazine and a label delivery roll, plural sheets of the labels cut into a size having a major diameter of from 30 to 450 mm are set in the label magazine, and the label is continuously delivered to the applying drum through the label delivery roll.
(22) The water activatable label applying apparatus according to the item (20), wherein the label applying apparatus further contains a label cutting device and a label delivery roll, the water activatable label, which has been rolled into a roll, is delivered to the label cutting device and cut into a size having a major diameter of from 30 to 450 mm by the label cutting device, and the cut label is continuously delivered to the applying drum through the label delivery roll.
(23) The water activatable label applying apparatus according to any one of the items (19) to (22), wherein the water supplying unit contains at least one of a humidifying device, a mist sprayer and a water supplying roll.
(24) The water activatable label applying apparatus according to the item (23), wherein the water supplying roll has on a surface thereof a relief pattern, with which water is coated in the pattern on the adhesive layer of the label.
(25) The water activatable label applying apparatus according to any one of the items (19) to (24), wherein the water used for reactivation of the adhesive layer of the label is tap water or well water controlled to a temperature of from 30 to 80°C.
(26) The water activatable label applying apparatus according to any one of the items (20) to (25), wherein the water supplying unit supplies from 0.1 to 7 g/m² of water to the adhesive layer of the label to reactivate the adhesive layer.
(27) The water activatable label applying apparatus according to any one of the items (20) to (26), wherein the label applying apparatus further contains an adherend transferring device, and the adherend transferring device delivers the adherend to the applying apparatus at a rate of from 1 to 1,500 per minute.
(28) An adherend having a label, containing the water activatable label of the item (16) or (17) applied to the adherend, and having an adhesion strength between the label and the adherend of from 200 to 500 gf/15 mm after storing under an environment of 25°C and 50%RH for one week.
(29) The adherend having a label according to the item (28), which is obtained with the label applying apparatus of any one of the items (19) to (27).

### Advantageous Effects of Invention

The water activatable label of the invention may contain a paper material having a resin stretched film, thereby preventing dew condensation water from penetrating into the paper material, and thus a label or the like using the same is prevented from suffering wrinkles of the label and the effusion of the adhesive.

The water activatable label of the invention has an adhesive layer containing an aqueous adhesive coated and solidified by drying thereon in advance, and thus there is no necessity of the use and management of the adhesive on applying the label on a container or the like, thereby facilitating the setup of the label applying apparatus before use and the maintenance thereof after use.

The water activatable label of the invention may contain a paper material having a resin stretched film, and thus on stripping off the label after use, the paper material is prevented from being broken due to swelling with water, thereby reducing the contamination of cleaning water due to the formation of sludge from the paper material. Furthermore, the water absorbing layer of the paper material has a liquid absorption volume in the prescribed range, and simultaneously the amount of the adhesive may be preferably reduced by forming into a pattern or the like, thereby facilitating the stripping off of the label on washing a bottle and the reduction of the adhesive deposits on a bottle.

The water activatable label of the invention causes no waste material of release paper as in a pressure-sensitive adhesive label, and may be separated from a returned bottle with water. Similarly, the water activatable label of the invention is not blocked under a high temperature environment in summer as in a heat-sensitive adhesive label, and thus may be easily managed on transportation and storage of the label. Consequently, the water activatable label of the invention and the water activatable sheet constituting the label have excellent advantageous effects as compared to the various ordinary labels and the sheets constituting the ordinary labels.

### Brief Description of Drawings

[Fig. 1]

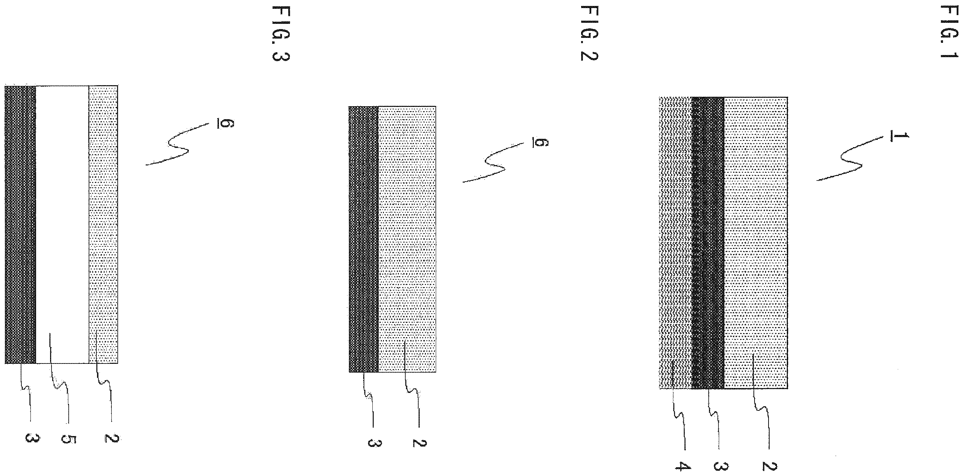

   Fig. 1 is a cross sectional view of one embodiment of the water activatable label or the water activatable sheet of the invention.
[Fig. 2]
   Fig. 2 is a cross sectional view of one embodiment of the paper material used in the invention.
[Fig. 3]
   Fig. 3 is a cross sectional view of another embodiment of the paper material used in the invention.
[Fig. 4]

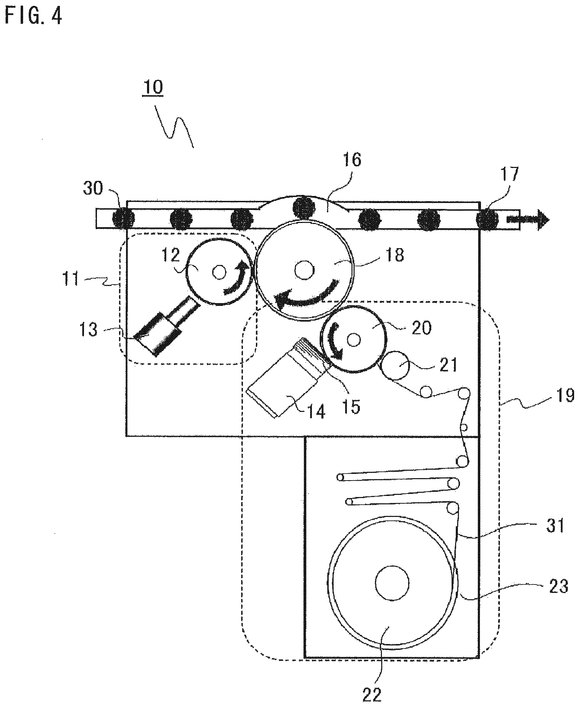

   Fig. 4 is a schematic overhead view of one embodiment of the water activatable label applying apparatus of the invention.

### Description of Embodiments

The water activatable sheet of the invention will be described in detail below. The following descriptions of the constitutional elements are based on representative embodiments of the invention, but the invention is not limited to the embodiments.

The numerical range expressed by "from X to Y" herein means a range including the numerals X and Y as the lower limit and the upper limit, respectively. The term "water activatable label" herein means such a label that the adhesive layer of the water activatable label is reactivated by supplying water to the adhesive layer, for example, by coating or spraying, and thereby the label is capable of being applied to an adherend. The term "blocking" herein means such a phenomenon that the aqueous adhesive of the water activatable label is activated before use, and the label is adhered to each other to become a block-like matter. The term "labeler" herein means a water activatable label applying apparatus, which may be an automated machine that applies a label to various adherends (such as a container).

### Water Activatable Sheet

### Paper Material and Water Absorbing Layer

The water activatable sheet of the invention contains a paper material 6 having on at least one surface thereof a porous water absorbing layer 3 as shown in Fig. 2, and an adhesive layer 4 is provided on the water absorption layer 3 of the paper material by coating and solidifying by drying an aqueous adhesive (see Fig. 1).

The water absorbing layer in the invention is porous, and on providing an aqueous adhesive described in detail later on the layer, absorbs a part of the aqueous adhesive into the interior of the layer, and while maintaining that state, the aqueous adhesive is solidified by drying, thereby providing the adhesive layer on the surface of the water absorbing layer.

The water absorbing layer has a liquid absorption volume of from 1 to 10 mL/m², and preferably from 3 mL/m² or more and 8 mL/m² or less. The adhesive layer of the sheet is reactivated on applying water to the adhesive layer by coating, spraying or the like, and thus the sheet is capable of being applied to an adherend.

It is preferred that the water absorbing layer contains a resin stretched film that contains a thermoplastic resin and inorganic fine powder having a hydrophilized surface, and is rendered porous by stretching, and it is more preferred that the water absorbing layer contains a resin stretched film that contains from 30 to 80% by weight of a polyolefin resin and from 20 to 70% by weight of calcium carbonate powder having an average particle diameter of from 0.1 to 2 µm having a surface that is hydrophilized with a cationic surfactant, and is rendered porous by stretching at a temperature that is lower than a melting point of the polyolefin resin.

The cationic surfactant is preferably a cationic vinyl copolymer obtained by copolymerization of an amine salt containing at least one of a diallylamine salt and an alkyldiallylamine salt and a hydrophilic vinyl monomer.

The water absorbing layer preferably further contains an acid modified polyolefin resin. The water absorbing layer may have a porosity that is preferably 20% or more, and more preferably 25% or more, and is preferably 55% or less, and more preferably 45% or less. The water absorbing layer has a thickness that is 1 µm or more, and more preferably 3 µm or more, and is preferably 15 µm or less, and more preferably 12 µm or less.

When the porosity of the water absorbing layer of the paper material used is 20% or more, there is a tendency that the aqueous adhesive may be maintained in an amount that is sufficient for applying to an adherend. When the porosity is 55% or less, there is a tendency that a process problem, such as breakage, is hard to occur on forming the water absorbing layer as the resin stretched film rendered porous, thereby facilitating the production of the intended paper material.

When the liquid absorption volume of the water absorbing layer of the paper material used is 1 mL/m² or more, there is a tendency that the aqueous adhesive may be maintained in an amount that is sufficient for applying to an adherend. When the liquid absorption volume is 10 mL/m² or less, there is a tendency that the effusion of the adhesive and the adhesive deposits due to an excessive amount of the aqueous adhesive coated are prevented from occurring.

When the paper material contains the resin stretched film, the label or the like using the same may be prevented from suffering wrinkles due to water, the stripping off of the label may be facilitated, and the cleaning water may be prevented from being contaminated.

The liquid absorption volume may be achieved through the use of the inorganic fine powder having a hydrophilized surface and the mixing ratio thereof used, the use of the acid modified polyolefin resin as a dispersant for the inorganic fine powder, the porosity of pores formed in the water absorbing layer that is from 25 to 45%, and the thickness of the layer that is from 1 to 15 µm.

### Thermoplastic Resin

The water absorbing layer constituting the water activatable sheet of the invention preferably contains a thermoplastic resin.

The kind of the thermoplastic resin used in the water absorbing layer is not particularly limited. Examples of the thermoplastic resin include an ethylene-based resin, such as high density polyethylene, medium density polyethylene and low density polyethylene; a polyolefin resin, such as a propylene-based resin, polymethyl-1-pentene and an ethylene-cyclic olefin copolymer; a polyamide resin, such as nylon-6, nylon-6, 6, nylon-6, 10 and nylon-6, 12; a thermoplastic polyester resin, such as polyethylene terephthalate and a copolymer thereof, polyethylene naphthalate and an aliphatic polyester; and a thermoplastic resin, such as polycarbonate, atactic polystyrene, syndiotactic polystyrene and polyphenylene sulfide. These may be used as a mixture of two or more kinds thereof. Among these, a polyolefin resin is preferably used from the standpoint of the water resistance, the chemical resistance, the production cost and the like, and a propylene-based resin is more preferably used among these.

Examples of the propylene-based resin used include a propylene homopolymer, and a copolymer of propylene as a major component with an α-olefin, such as 1-ethylene, 1-butene, 1-hexene, 1-heptene and 4-methyl-1-pentene. The stereoregularity of the propylene-based resin is not particularly limited, and those having such stereoregularities as isotacticity, syndiotacticity and various extents of stereoregularities may be used. In the case where the propylene-based resin is a copolymer, the copolymer may be a two-component system, a three-component system or a four-component system, and may be a random copolymer or a block copolymer. Among these, a polyolefin resin having a melting point (i.e., a DSC peak temperature) of less than 160°C is preferably used, and specifically a multi-component random copolymer containing propylene as a major component is particularly preferred.

The amount of the thermoplastic resin mixed in the water absorbing layer is preferably 30% by weight or more, more preferably 35% by weight or more, and further preferably 40% by weight or more, and is preferably 80% by weight or less, more preferably 75% by weight or less, and further preferably 70% by weight or less.

### Inorganic Fine Powder having Hydrophilized Surface

The water absorbing layer constituting the water activatable sheet of the invention preferably contains inorganic fine powder having a hydrophilized surface.

The inorganic fine powder may have an average particle diameter that is preferably 0.01 µm or more, and more preferably 0.1 µm or more, and is preferably 10 µm or less, and more preferably 2 µm or less. Specific examples thereof used include calcium carbonate, baked clay, silica, diatom earth, white clay, talc, titanium oxide, barium sulfate, alumina, zeolite, mica, sericite, bentonite, sepiolite, vermiculite, dolomite, wollastonite and glass fibers, and calcium carbonate is preferred.

The amount of the inorganic fine powder mixed in the water absorbing layer is preferably 20% by weight or more, more preferably 25% by weight or more, and further preferably 30% by weight or more, and is preferably 70% by weight or less, more preferably 65% by weight or less, and further preferably 60% by weight or less.

The inorganic fine powder preferably has a surface that has been subjected to a hydrophilizing treatment. The hydrophilizing treatment performed increases the wettability of the water absorbing layer to water, thereby facilitating the introduction of water and an aqueous adhesive into the interior of the porous water absorbing layer.

The surface treatment of the inorganic fine powder is preferably performed by using a cationic surfactant as a surface treating agent. Preferred examples of the cationic surfactant include a cationic vinyl copolymer obtained by copolymerization of an amine salt containing at least one of a diallylamine salt and an alkyldiallylamine salt and a hydrophilic vinyl monomer.

Specific examples of the diallylamine salt and the alkyldiallylamine salt include a diallylamine salt, an alkyldiallylamine salt and a dialkyldiallylamine salt having from 1 to 4 carbon atoms, such as a methyldiallylamine salt, an ethyldiallylamine salt, a dimethyldiallylamine salt, a chloride, a bromide, a methosulfate and an ethosalfate of methacryloyloxyethyltrimethylammonium, acryloyloxyethyltrimethylammonium, methacryloyloxyethyldimethylethylammonium and acryloyloxyethyldimethylethylammonium, and a quaternary ammonium salt obtained by alkylating N,N-dimethylaminoethyl methacrylate or N,N-dimethylaminoethyl acrylate with an epoxy compound, such as epichlorohydrin, glycidol and glycidyltrimethylammonium chloride. Among these, a diallylamine salt, a methyldiallylamine salt and a dimethyldiallylamine salt are preferred.

The anion constituting the diallylamine salt and the alkyldiallylamine salt is preferably an anion selected from a chloride ion, a bromide ion, a sulfate ion, a nitrate ion, a methyl sulfate ion, an ethyl sulfate ion and a methanesulfonate ion.

Specific examples of the hydrophilic vinyl monomer include acrylamide, methacrylamide, N-vinylformamide, N-vinylacetamide, N-vinylpyrrolidone, 2-hydroxyethyl (meth)acrylate, 3-hydroxypropyl (meth)acrylate, methyl (meth) acrylate, ethyl (meth) acrylate and butyl (meth) acrylate. Among these, acrylamide and methacrylamide are preferred.

The copolymerization ratio of the amine salt and the hydrophilic vinyl monomer may be arbitrarily determined, and the amount of the amine salt is preferably 10% by mol or more, more preferably 50% by mol or more, and further preferably 65% by mol or more, and is preferably 99% by mol or less, more preferably 97% by mol or less, and further preferably 95% by mol or less. The amount of the hydrophilic vinyl monomer is preferably 1% by mol or more, more preferably 3% by mol or more, and further preferably 5% by mol or more, and is preferably 90% by mol or less, more preferably 50% by mol or less, and further preferably 35% by mol or less. The monomers may be subjected to copolymerization in the form of a mixture of two or more kinds thereof.

The cationic vinyl copolymer as the surface treating agent obtained by copolymerization of the amine salt and the hydrophilic vinyl monomer may be obtained by performing polymerization reaction of the monomer mixture liquid with a polymerization initiator, such as ammonium persulfate or 2,2-azobis(2-amidinopropane) dihydrochloride, in an aqueous medium under a temperature environment of from 50 to 80°C for from 2 to 24 hours.

The copolymer may be produced according to the methods described in JP-A 5-263010, JP-A 7-300568. A part of the methods described in JP-A 57-48340, JP-A 63-235377 may also be used. Preferred examples of the polymer among these include a copolymer of a hydrochloride or a sulfate of diallyamine or diallyldimethylamine and methacrylamide or acrylamide.

The molecular weight of the polymer in terms of limiting viscosity in a sodium chloride aqueous solution having a concentration of 1 mol/L at 25°C is generally 0.05 or more, and preferably 0.1 or more, and is generally 3 or less, preferably 0.7 or less, and more preferably 0.45 or less. The molecular weight thereof in terms of weight average molecular weight measured by gel permeation chromatography is generally approximately 5, 000 or more, and preferably 10,000 or more, and is generally 950,000 or less, preferably 500,000 or less, and more preferably 80,000 or less.

The surface treating agent may be used in combination of a water soluble anionic surfactant. The water soluble anionic surfactant used in combination as the surface treating agent has an anionic functional group in the molecule thereof. Specific examples of the water soluble anionic surfactant include a sulfonate salt having a hydrocarbon group having from 4 to 40 carbon atoms, a phosphate ester salt having a hydrocarbon group having from 4 to 40 carbon atoms, a phosphate monoester or diester salt of a higher alcohol having from 4 to 40 carbon atoms, and an alkyl betaine or an alkyl sulfobetaine having a hydrocarbon group having from 4 to 40 carbon atoms, which may be selected appropriately for providing the advantageous effects of the invention.

The cation constituting the sulfonate salt and the phosphate ester salt is preferably a cation selected from a lithium ion, a sodium ion, a potassium ion, a calcium ion, a magnesium ion, primary to quaternary ammonium ions, and primary to quaternary phosphonium ions, and a sodium ion and a potassium ion are preferably used.

Examples of the sulfonate salt having a hydrocarbon group having from 4 to 40 carbon atoms include a sulfonate salt and a sulfoalkanecarbonate salt having a hydrocarbon group having a linear, branched or cyclic structure containing from 4 to 40 carbon atoms, preferably from 8 to 20 carbon atoms, and specific examples thereof include an alkylbenzenesulfonate salt having from 4 to 40 carbon atoms, preferably from 8 to 20 carbon atoms, naphthalenesulfonate salt, an alkylnaphthalenesulfonate salt having a linear, branched or cyclic structure having from 4 to 30 carbon atoms, preferably from 8 to 20 carbon atoms, a sulfonate salt of diphenyl ether or biphenyl having an alkyl group having a linear or branched structure having from 1 to 30 carbon atoms, preferably from 8 to 20 carbon atoms, an alkyl sulfate ester salt having from 1 to 30 carbon atoms, preferably from 8 to 20 carbon atoms, a sulfoalkanecarboxylate ester salt, and a sulfonate salt of an alkylene oxide adduct of an alkyl alcohol having from 8 to 30 carbon atoms, preferably from 10 to 20 carbon atoms.

Specific examples thereof include an alkanesulfonate salt and an aromatic sulfonate salt, such as octanesulfonate salt, dodecanesulfonate salt, hexadecanesulfonate salt, octadecanesulfonate salt, 1- or 2-dodecylbenzenesulfonate salt, 1- or 2-hexadecylbenzenesulfonate salt, 1- or 2-octadecylbenzenesulfonate salt, various isomers of dodecylnaphthalenesulfonate salt, a salt of a β-naphthalenesulfonic acid-formalin condensate, various isomers of octylbiphenylsulfonate salt, dodecyldiphenylethersulfonate salt, and dodecylligninsulfonate salt; an alkyl sulfate ester salt, such as dodecyl sulfate salt and hexadecyl sulfate salt; a sulfoalkanecarboxylate salt, such as a dialkyl sulfosuccinate ester having an alkyl group having from 1 to 30 carbon atoms, preferably from 4 to 20 carbon atoms, having a linear, branched or cyclic structure, more specifically, di(2-ethylhexyl) sulfosuccinate salt, N-methyl-N-(2-sulfoethyl)alkylamide salt (the alkyl group has from 1 to 30 carbon atoms, preferably from 12 to 18 carbon atoms), such as an amide compound derived from N-methyltaurine and oleic acid, a 2-sulfoethyl ester salt of a carboxylic acid having from 1 to 30 carbon atoms, preferably from 10 to 18 carbon atoms, lauryl sulfate triethanolamine, lauryl sulfate ammonium, polyoxyethylene lauryl sulfate salt, and polyoxyethylene cetyl sulfate salt; a sulfonate salt of an alkylene oxide adduct of an alkyl alcohol having from 8 to 30 carbon atoms, preferably from 10 to 20 carbon atoms, such as a sulfate ester salt of ethylene oxide adduct of lauryl alcohol, a sulfate ester salt of ethylene oxide adduct of cetyl alcohol, and a sulfate ester salt of ethylene oxide adduct of stearyl alcohol.

Specific examples of the phosphate monoester or diester salt or the phosphate triester having a linear, branched or cyclic hydrocarbon group having from 4 to 40 carbon atoms, preferably from 8 to 20 carbon atoms include disodium salt or dipotassium salt of dodecyl phosphate, disodium salt of hexadecyl phosphate, disodium salt or dipotassium salt of didodecyl phosphate, sodium salt or potassium salt of dihexadecyl phosphate, and phosphate triester of ethylene oxide adduct of dodecyl alcohol.

Specific example of the alkyl betaine or the alkyl sulfobetaine having a hydrocarbon group having from 4 to 40 carbon atoms, preferably from 10 to 20 carbon atoms include lauryl dimethyl betaine, stearyl dimethyl betaine, dodecyl dimethyl(3-sulfopropylene) ammonium inner salt, cetyl dimethyl(3-sulfopropyl) ammonium inner salt, stearyl dimethyl(3-sulfopropyl) ammonium inner salt, 2-octyl-N-carboxymethyl-N-hydroxyethyl imidazolinium betaine and 2-lauryl-N-carboxymethyl-N-hydroxyethyl imidazolinium betaine.

Preferred examples among these include a sulfonate salt having a hydrocarbon group having from 4 to 40 carbon atoms, and more preferred examples among these include ones selected from an alkanesulfonate salt having from 10 to 20 carbon atoms, an aromatic sulfonate salt having an alkyl group having from 10 to 20 carbon atoms, and a sulfate ester salt of an alkylene oxide adduct of an alkyl alcohol having an alkyl group having from 10 to 20 carbon atoms.

The inorganic fine powder is wet-pulverized in the presence of the cationic copolymer dispersant. Specifically, an aqueous medium, preferably water, is added to the inorganic fine powder to make a weight ratio (inorganic fine powder) / (aqueous medium) of from 70/30 to 30/70, and preferably from 60/40 to 40/60, to which the cationic copolymer dispersant is added in an amount in terms of solid content of preferably 0.05 part by weight or more, and more preferably 0.1 part by weight or more, and preferably 2 parts by weight or less, and more preferably 1 part by weight or less, per 100 parts by weight of the inorganic fine powder, and the mixture is wet-pulverized by an ordinary method. In alternative, such a method may be employed that an aqueous medium containing the cationic copolymer dispersant having been dissolved in an amount within the aforementioned range in advance is prepared and mixed with the inorganic fine powder, and the mixture is wet-pulverized by an ordinary method. The wet pulverization may be performed by a batch process or a continuous process, and a mill or the like using a pulverizing device, such as a sand mill, an attritor or a ball mill, is preferably used. The inorganic fine powder particles having an average particle diameter of 15 µm or less, and preferably from 0.1 to 5 µm, may be obtained by the wet pulverization.

The wet-pulverized product is then dried, and before drying, a classification process may be performed to remove coarse powder that is removed with a 350-mesh sieve. The drying may be performed by a known method, such as hot air drying and spray drying, and is preferably performed by media fluidized drying. The media fluidized drying herein is a method of drying various kinds of substances, in which a slurry substance is fed to media particles that is in a fluidized state with hot air (at from 80 to 150°C) (i.e., a fluidized bed) in a drying tower, and the slurry substance thus fed is dispersed over the fluidized bed while being attached in the form of a membrane to the surface of the media particles actively fluidized, and thus is dried with hot air.

The media fluidized drying may be easily performed, for example, by a media fluidized drying machine "Media Slurry Dryer", produced by Nara Machinary Co., Ltd. The media fluidized drying is preferably employed since dying and pulverization of aggregated particles (i.e., formation of primary particles) can be performed simultaneously. The inorganic fine powder that contains a considerably small amount of coarse powder may be obtained by drying the wet-pulverized slurry thus obtained by media fluidized drying. However, it may be also effective that after performing the media fluidized drying, the particles are pulverized and classified by desired methods. In the case where the wet-pulverized product is dried by ordinary hot air drying instead of the media fluidized drying, the resulting cake is preferably subjected to pulverization and classification of the particles by desired methods.

The dried cake of the wet-pulverized product obtained by this method is easily collapsed to form the inorganic fine powder particles. Accordingly, a process step of pulverizing the dried cake may not be necessarily provided. The inorganic fine powder particles thus obtained are preferably subjected to a multi-stage surface treatment by treating the particles in an aqueous medium containing the aforementioned water soluble anionic surfactant.

### Additional Components

The water absorbing layer constituting the water activatable sheet of the invention may contain components described below.

For example, in the case where an organic filler for facilitating the formation of pores is added, the organic filler may be used to make an average dispersed particle diameter of generally 0.01 µm or more, and preferably 0.1 µm or more, and generally 15 µm or less, and preferably 5 µm or less. In the case where the organic filler is added, a resin that is different in species from the thermoplastic resin as the major component is preferably selected. For example, in the case where the thermoplastic resin film is a polyolefin resin film, the organic filler used may be a polymer, such as polyethylene terephthalate, polybutylene terephthalate, polycarbonate, nylon-6, nylon-6,6, cyclic polyolefin, polystyrene, or polymethacrylate that has a melting point (for example, from 170 to 300°C) or a glass transition temperature (for example, from 170 to 280°C) that is higher than the melting point of the polyolefin resin, and is incompatible with the polyolefin resin.

Furthermore, for example, a dispersant for the inorganic fine powder may be used for facilitating the formation of a large number of uniform and fine pores by preventing the inorganic fine powder from being aggregated.

The water absorbing layer may further contain depending on necessity a heat stabilizer, an ultraviolet ray stabilizer, a lubricant, an antistatic agent and the like. These additives may be added in an amount of 1% by weight or less respectively.

Examples of the dispersant include an acid-modified polyolefin and a silanol-modified polyolefin. Among these, an acid-modified polyolefin is preferably used. Examples of the acid-modified polyolefin include an acid anhydride group-containing polyolefin obtained by random copolymerization or graft copolymerization with maleic anhydride, a carboxylic acid group-containing polyolefin obtained by random copolymerization or graft copolymerization with an unsaturated carboxylic acid, such as methacrylic acid and acrylic acid, and an epoxy group-containing polyolefin obtained by random copolymerization or graft copolymerization with glycidyl methacrylate. Specific examples thereof include maleic anhydride-modified polypropylene, maleic anhydride-modified polyethylene, acrylic acid-modified polypropylene, an ethylene-methacrylic acid random copolymer, an ethylene-glycidyl methacrylate random copolymer, an ethylene-glycidyl methacrylate graft copolymer and glycidyl methacrylate-modified polypropylene, and among these, maleic anhydride-modified polypropylene and maleic anhydride-modified polyethylene are preferably used.

Specific examples of maleic anhydride-modified polypropylene and maleic anhydride-modified polyethylene include Modic AP P513V and Modic AP M513, trade names, available from Mitsubishi Chemical Corporation, Yumex 1001, Yumex 1010 and Yumex 2000, trade names, available from Sanyo Chemical Industries, Ltd., and HPR VR101, a trade name, available from Du Pont-Mitsui Polychemicals Co., Ltd.

The acid modification rate of the acid-modified polyolefin is preferably 0.01% by weight or more, and more preferably 0.05% by weight or more, and is preferably 20% by weight or less, and more preferably 15% by weight or less. When the acid modification rate is 0.01% by weight or more, there is a tendency that the dispersing effect of the surface-treated inorganic fine powder into the thermoplastic resin (A) may be sufficiently obtained. When the acid modification rate is 20% by weight or less, there is a tendency that the softening point of the acid-modified polyolefin may not be too low, and thus the compounding with the thermoplastic resin may be relatively easily performed.

The content of the dispersant in the water absorbing layer is generally 0.01 part by weight or more, preferably 0.05 part by weight or more, and more preferably 0.1 part by weight or more, and is generally 100 parts by weight or less, preferably 50 parts by weight or less, and more preferably 20 parts by weight or less, per 100 parts by weight of the resin composition containing the thermoplastic resin, the inorganic fine powder and the organic filler. When the content of the dispersant (D) is 0.01 part by weight or more, there is a tendency that the surface-treated inorganic fine powder may be sufficiently dispersed, and thus the target surface aperture ratio may be easily obtained, thereby facilitating the improvement of the liquid absorption coefficient. When the content thereof is 100 parts by weight or less, there is a tendency that breakage on stretching may be suppressed due to the good stretchability.

### Paper Material and Additional Layer

The paper material used in the invention may have a single layer structure containing the porous water absorbing layer, and preferably has a multilayer structure having layers that impart an additional function laminated.

Examples of the additional layer include a printable layer that facilitates various kinds of printing, a base material layer that imparts strength to the paper material and supports the water absorbing layer, a glossy layer that enhances the design of the sheet, a reinforcing layer that enhances the mechanical strength of the sheet, an anti-blocking layer that prevents the sheets from being blocked, a barrier layer that prevents penetration of water and the like in the thickness direction of the sheet, and a light shielding layer that prevents light from penetrating through the sheet.

In the invention, for example, a paper material containing a porous water absorbing layer formed of pulp paper having laminated thereon a barrier layer formed of OPP for preventing water penetration may be used. However, in the invention, a paper material formed of a multilayer resin film, particularly a multilayer stretched resin film, containing resin films for all the layers, is preferably used since the film may prevent water penetration, is excellent in mechanical strength, and causes less contamination of cleaning water since the film is not broken on stripping off and washing.

The printable layer in the paper material preferably contains a thermoplastic resin as similar to the water absorbing layer. More specifically, the uniaxially stretched product (B) described in JP-A 7-314622, the surface layer (B) described in JP-A 2000-289156, the amorphous resin-containing layer (B) and the surface layer (C) described in JP-A 2002-36470, the layer (A) described in JP-A 2002-173538, and the printing layer (A) and the gloss imparting layer (B) described in JP-A 2007-83714 may be provided on the surface, and a known pigment coated layer may be provided on the surface.

The base material layer in the paper material preferably contains a thermoplastic resin as similar to the water absorbing layer and the printable layer. More specifically, the base material layer (the first thermoplastic resin film and the biaxially stretched plastic film) of JP-B 46-40794, the base material layer (A) of JP-A 7-314622, the base material layer (A) of JP-A 2000-289156, the base material layer (A) of JP-A 2002-36470, the layer (B) of JP-A 2002-173538, and the base layer (C) of JP-A 2007-83714 may be provided. In the case where the base material layer is provided, the thickness thereof is preferably 20 µm or more, more preferably 30 µm or more, and further preferably 40 µm or more, and is preferably 300 µm or less, more preferably 150 µm or less, and further preferably 90 µm or less.

Preferred embodiments of the paper material include a paper material 6 containing a printable layer 2 and a water absorbing layer 3 as shown in Fig. 2, and a paper material 6 containing a printable layer 2, a base material layer 5 and a water absorbing layer 3 that are laminated in this order as shown in Fig. 3, but the paper material capable of being used in the invention is not limited to the embodiments.

### Stretching

The water absorbing layer constituting the paper material of the invention is preferably stretched at least uniaxially. The water absorbing layer containing the inorganic fine powder forms a large number of pores thereinside and a large number of apertures on the surface thereof, thereby becoming porous to exhibit excellent water absorbing property.

In the case where the paper material of the invention is the multilayer resin film, each of the layers may be uniaxially stretched or biaxially stretched after lamination, thereby providing a multilayer resin stretched film containing layers, all of which are uniaxially or biaxially oriented. In alternative, on one surface of the water absorbing layer having been uniaxially stretched in advance, another layer may be laminated, and then the layers may be again uniaxially stretched in a direction that is different from the water absorbing layer, thereby providing a multilayer resin stretched film that is oriented biaxially and uniaxially. Furthermore, on one surface of another layer having been stretched uniaxially in advance, the water absorbing layer may be laminated, and then the layers may be again uniaxially stretched in a direction that is different from the another layer, thereby providing a multilayer resin stretched film that is oriented biaxially and uniaxially. Moreover, the layers may be stretched individually and then laminated on each other. The resin film having a multilayer structure with an intended stretched condition may be obtained by utilizing appropriately these methods and the similar methods.

For example, in addition to the above, laminated products of nonstretched/uniaxially stretched, uniaxially stretched/uniaxially stretched, biaxially stretched/uniaxially stretched, nonstretched/biaxially stretched, uniaxially stretched/biaxially stretched, and biaxially stretched/biaxially stretched may be obtained. Furthermore, in the case where the paper material constituting the water activatable sheet is formed of a multilayer resin film having a three-layer structure, multilayer stretched resin films of nonstretched/uniaxially stretched/uniaxially stretched, uniaxially stretched/uniaxially stretched/uniaxially stretched, nonstretched/biaxially stretched/uniaxially stretched, uniaxially stretched/biaxially stretched/uniaxially stretched, biaxially stretched/biaxially stretched/uniaxially stretched, nonstretched/biaxially stretched/biaxially stretched, uniaxially stretched/biaxially stretched/biaxially stretched, and biaxially stretched/biaxially stretched/biaxially stretched may be provided.

The stretching may be performed by various known methods. The stretching is preferably performed at a temperature that is higher than the crystallization temperature of the thermoplastic resin constituting the layer and is lower than the melting point thereof by 5°C or more. The layer may be stably stretched, and pores may be formed inside the water absorbing layer within the temperature range. In the case where two or more kinds of resins are used, the stretching is preferably performed at a temperature that is higher than the crystallization temperature of the resin that has the maximum mixed amount and is lower than the melting point thereof by 5°C or more. For example, in the case where a propylene homopolymer having a melting point of from 155 to 167°C is used as the thermoplastic resin, the stretching temperature is preferably selected from a range of from 100 to 162°C, and in the case where high density polyethylene having a melting point of from 121 to 136°C is used, the stretching temperature is preferably selected from a range of from 70 to 131°C.

Specific examples of the stretching method include a multiple roll stretching method utilizing peripheral speed differences among plural rolls, and a clip stretching method utilizing a tenter oven. According to the multiple roll stretching method, a paper material having arbitrary porosity, rigidity, opacity, smoothness and glossiness may be easily obtained by adjusting the stretching ratio arbitrarily. According to the clip stretching method, a resin stretched film having a large width may be obtained, and improvement of the yield of the paper material and reduction of the production cost thereof may be easily achieved. Accordingly, these methods may be used in combination. The stretching speed is not particularly limited and is generally preferably from 20 to 350 m/min.

The stretching ratio is not particularly limited and may be determined in consideration of the purpose of the water activatable sheet of the invention and the characteristics of the thermoplastic resin used. In the case of the multiple roll stretching method, the stretching ratio is generally preferably 2 times or more, more preferably 3 times or more, and further preferably 4 times or more, and is generally preferably 11 times or less, more preferably 10 times or less, and further preferably 7 times or less. In the case of the clip stretching method using a tenter oven, the layer is preferably stretched at from 4 to 11 times. The area ratio in the combination of these methods is generally 2 times or more, preferably 3 times or more, and more preferably 4 times or more, and is generally 80 times or less, preferably 60 times or less, and more preferably 50 times or less. When the area ratio is 2 times or more, there is a tendency that a more uniform thickness may be easily obtained by preventing unevenness in stretching. When the area ratio is 80 times or less, there is a tendency that breakage on stretching and formation of coarse pores may be prevented from occurring further effectively.

### Heat Treatment

The resin film having been stretched is preferably subjected to a heat treatment. The temperature of the heat treatment is preferably selected in a temperature range that is higher than the stretching temperature by from 0 to 30°C. The heat treatment performed accelerates crystallization of the amorphous portion of the thermoplastic resin, which reduces the thermal shrinkage in the stretching direction, thereby reducing the tightening of a roll on storing and the waving or the like due to the tightening. The heat treatment may be generally performed by roll heating or with a heating oven, which may be employed in combination. The heat treatment is preferably performed in a state where the stretched film is maintained under tension, thereby providing a larger effect of the treatment.

### Characteristics of Paper Material

The water absorbing layer of the resulting paper material may have a porosity that is preferably 20% or more, more preferably 25% or more, and further preferably 30% or more, and is preferably 55% or less, more preferably 45% or less, and further preferably 40% or less, for facilitating the achievement of the intended liquid absorption volume. The water absorbing layer may have a thickness that is preferably 1 µm or more, more preferably 2 µm or more, and further preferably 3 µm or more, and is preferably 15 µm or less, more preferably 12 µm or less, and further preferably 10 µm or less, for facilitating the achievement of the intended liquid absorption volume.

The water absorbing layer may be subjected to an embossing finish on the surface thereof on molding or after molding. By performing the embossing finish, the water activatable sheet may be adhered to an adherend described later by spot adhesion through the peaks of the emboss shape, which may provide an advantage that the water activatable sheet is easily removed from the adherend.

### Aqueous Adhesive Layer

The aqueous adhesive used in the aqueous adhesive layer constituting the water activatable sheet of the invention may be one that can be dissolved, diluted and coated with an aqueous solvent, and may be a so-called remoisturable glue or remoisturable adhesive that can be dissolved again and reactivated by supplying water after drying. Examples thereof include ones containing at least one kind selected from starch and a derivative thereof, pullulan, glue, gelatin, casein, methyl cellulose, carboxymethyl cellulose, gum arabic, traganth gum, guar gum, sodium alginate, polyvinyl alcohol, polyvinyl ether, polyvinyl pyrrolidone, polyacrylic acid and a salt thereof, polyacrylic acid amide, polyacrylate ester, water soluble polyurethane, and an ethylene-vinyl acetate resin. Preferred examples among these include ones containing polyvinyl alcohol or an ethylene-vinyl acetate resin. The aqueous adhesive may be used in the form of an aqueous solution or a dispersion liquid containing the aforementioned substance having been dissolved and diluted with an aqueous solvent.

Specific preferred examples of the aqueous adhesive in the invention include Gohsenol GH-17, Gohsenol GL-05, Gohsenol GL-03 and Gohsenol KH-17 (trade names, produced by Nippon Synthetic Chemical Industry Co., Ltd.), Kuraray Poval PVA203, Kuraray Poval PVA205 and Kuraray Poval PVA217 (trade names, produced by Kuraray Co., Ltd.), Denka Poval K-05, Denka Poval B-04, Denka Poval B-05 and Denka Poval B-17 (trade names, produced by Denki Kagaku Kogyo K.K.), J-Poval JP-04, J-Poval JP-05, J-Poval JP-18, J-Poval JP-20 and J-Poval JP-24 (trade names, produced by Japan VAM & Poval Co., Ltd.), and KS-0515E60 and KS-0515560 (names of prototypes, produced by Hokkoku Koryou Kougyou Co., Ltd.). The aqueous adhesives may contain an antiseptic and the like depending on necessity.

The dry coated amount of the aqueous adhesive may be appropriately determined depending on the liquid absorption volume of the paper material used and the purpose thereof, and is 0.1 g/m² or more, more preferably 0.5 g/m² or more, further preferably 1 g/m² or more, and particularly preferably 3 g/m² or more, and is 30 g/m² or less, more preferably 25 g/m² or less, further preferably 20 g/m² or less, and particularly preferably 10 g/m² or less.

When the dry coated amount of the aqueous adhesive is 0.1 g/m² or more, there is a tendency that the water activatable label using the water activatable sheet may provide a sufficient adhesion strength to an adherend. When the coated amount thereof is 30 g/m² or less, there is a tendency that the adhesive may be activated with a small amount of water on applying the label, the effusion of the aqueous adhesive on using the label may be reduced, and the adhesive deposits on stripping off the label may be reduced.

The adhesive layer obtained by coating and drying the aqueous adhesive may be provided on the entire surface of the paper material (i.e., 100% solid) or may be provided partially on the paper material in such a range that does not impair the adhesion force.

In the case where the adhesive layer is provided partially on the paper material, the adhesive layer may be provided in the form of a continuous particular pattern or a discontinuous irregular shape. In general, a gravure coater, a flexographic coater or the like may be used for coating the aqueous adhesive on the water absorbing layer of the paper material, and thus a pattern having a cycle that is equal to or shorter than the outer peripheral length of the roll used for coating. However, it is considered that a partial coating pattern having no particular continuous pattern may be provided by such a measure as the use of a spray coater that is controlled in discharge amount with a computer, or the like.

In the case where the aqueous adhesive is coated partially on the water absorbing layer of the paper material, the aqueous adhesive may be provided in a pattern having an area ratio that is preferably 30% or more, and more preferably 50% or more, and is preferably 95% or less, and more preferably 80% or less, of the surface of the water absorbing layer. By providing the aqueous adhesive in a pattern, the adhesion force and the stripping force thereof are liable to be uniform in the plane directions. When the area ratio of the adhesive layer on the surface of the water absorbing layer is 30% or more, there is a tendency that the adhesion to an adherend may be sufficiently obtained. When the area ratio is 95% or less, there is a tendency that an appropriate air layer (or a fluidized layer of air) may be formed between the water activatable label using the water activatable sheet and an adherend in the non-adhered portion, as compared to the case where the adhesive layer is formed in solid (100%) over the entire surface, whereby blisters due to air retained between the label and the adherend may be prevented from occurring, the drying time on applying the label may be shortened, and the label may be easily stripped off by washing with water.

The aqueous adhesive may be coated on the water absorbing layer by using a die coater, a bar coater, a comma coater, a lip coater, a roll coater, a knife coater, a gravure coater, a spray coater, a blade coater, a flexographic coater, a reverse coater or the like. Among these, a gravure coater and a flexographic coater are preferably used since the adhesive may be easily coated in a pattern thereby.

The pattern is preferably such a pattern that has specific shapes formed continuously with a specific interval, which may be expressed as dots, stripes, a lattice or a checkerboard. The shapes constituting dots or a checkerboard and the shape of lines constituting stripes and a lattice are not particularly limited. For example, the dots may have not only a circular shape, but also an elliptical shape, a triangular or higher polygonal shape, an arbitrary letter, a design, such as a corporate mark and a character, and the like, and the sizes thereof may be differentiated from each other. The checkerboard may be variants thereof, such as a scale pattern and a staggered checkerboard. The lines constituting the stripes and the checkerboard may be different in thickness from each other. The lines each may vary in thickness and may be a dashed line or a wavy line, and the wavy line may be a sign wave, a triangular wave or a pulse wave. The aqueous adhesive after coating may be solidified by drying through a heating oven, an infrared oven or the like to become the adhesive layer.

The adhesive layer thus obtained may be reactivated by supplying water thereto and capable of being applied to an adherend.

The label using the water activatable sheet of the invention preferably has a decoration, such as printing, on the side opposite to the adhesive layer since the label applied to an adherend may be used for displaying the content of the adherend. In the water activatable label of the invention, the formation of the adhesive layer and the printing process described in detail later may be performed separately from each other, but the formation of the adhesive layer and the printing process are preferably performed simultaneously, thereby reducing the number of process steps reasonably.

### Printing

In the case where the paper material constituting the water activatable sheet of the invention has a multilayer structure, in which a printable layer is provided on the side opposite to the water absorbing layer, the printable layer may have printing thereon. Examples of the printing include a product name, components of a product, a recommended retail price, a manufacturer, a distributor, a consume-by date, a precaution, a design and a pattern of a product, which may be printed by a method, such as seal printing, gravure printing, flexographic printing, offset printing, screen printing, ink-jet printing and the like. Assuming that the paper material constituting the water activatable sheet of the invention to be printed is in the form of a wound roll, the paper material is preferably printed by a method, such as UV planographic printing, UV rotary seal printing, UV flexographic printing, UV rotary offset printing, UV rotary screen printing, UV ink-jet printing and the like, by which the printing may be performed continuously, and the ink may be quickly dried.

The printing may be made on the side of the water absorbing layer in such an extent that does not impair the absorption of the aqueous adhesive by the water absorbing layer. Specifically, the surface of the water absorption layer may be printed as similar to the above in advance, and then the aqueous adhesive may be coated and solidified by drying on the printing, thereby providing the adhesive layer. The printing in this case may be viewed through an adherend (for example, a glass bottle), and may be applied, for example, to a coupon that may be viewed only after peeling by a user.

### Decoration

In addition to the printing, the printable layer of the water activatable sheet may have a decoration by foil stamping, film lamination or the like. The foil stamping may be performed by a method, such as hot stamping, cold stamping and the like. The film lamination may protect the printing from discoloration and abrasion, and impart glossiness to improve the appearance and to enhance the classy touch. A hologram film used for lamination may further enhance the appearance, a UV-shielding film used for lamination may protect the printing from an ultraviolet ray, and a mat film used for lamination may enable writing with a pencil or a pen. The film lamination may also achieve enhancement of the structure of the sheet, by which a label or the like using the sheet may be prevented from undergoing illicit modification and falsification.

A release varnish layer may further provided on the printing or the decoration. The release varnish layer may be provided with a commercially available UV release varnish or the like in combination with the printing in the aforementioned printing process. The release varnish layer provided is effective for preventing the water activatable sheets of the invention from being blocked through reactivation thereof under a high humidity environment or reduction thereof.

### Utilization Mode of Water Activatable Sheet

The water activatable sheet of the invention has an adhesive layer, in which the adhesive is activated by supplying water thereto, and becomes capable of being easily applied to various adherends.

Due to the features of the water activatable sheet of the invention, the water activatable sheet may be used as a building material, such as wallpaper and a paper panel door, various revenue stamps, such as a fiscal stamp, a postal stamp, a mail envelope, a sightseeing poster, an election campaign poster, and a tape, such as a decoration tape and a masking tape.

Furthermore, there may be considered applications to a product having the aqueous adhesive that contains a component having another function, for example, a facial pack containing a pharmaceutical ingredient or a cosmetic ingredient, a wet dressing containing an anti-inflammatory ingredient or an analgesic ingredient, and toys and stationery for children containing an edible ingredient or a flavor ingredient (such as strawberry flavor).

The water activatable sheet of the invention that is used as a label having a shape according to an adherend, such as a container, is particularly useful as a substitute of an ordinary label, such as a glue label, a pressure-sensitive adhesion label and a heat-sensitive adhesion label.

### Water Activatable Label

The water activatable label of the invention is a label produced with the water activatable sheet described above. A typical example of the water activatable label has a printing or a decoration and has a shape according to an adherend, but a printing or a decoration may not be necessarily provided. The shape according to an adherend referred herein means such a shape that achieves the object of the label by applying the label to the desired position of the adherend, and the specific shape thereof is not particularly limited. Examples of the shape include various shapes including a rectangular shape, a circular shape, an elliptical shape, a stripe shape, a radial shape and a star shape. The water activatable label of the invention may be produced in such a manner that the water activatable sheet is subjected to printing or decoration and then formed into a shape according to an adherend by punching or the like, but the production method thereof is not particularly limited.

In the production of the water activatable label of the invention, the process of printing, i.e., the printing apparatus, may be equipped with the gravure coater or the flexographic coater used for coating the aqueous adhesive and a drying device (such as a hot air oven or an infrared oven), and thereby the printed water activatable label may be produced reasonably in one process from the paper material.

The label may be applied to an adherend by using a label applying apparatus (i.e., a labeler) capable of reactivating the label and a solution (such as water and electricity). The series of processes of from the production of the label to the application of the label undergoes less loss of the materials (such as the discarded adhesive and release paper, the loss of the paper material and the label until starting up), a smaller number of process steps, and less labor, as compared to an ordinary label, such as a glue label, a pressure-sensitive adhesion label and a heat-sensitive adhesion label, and thus is excellent due to the improvements of the yield of products and the workability.

### Adherend

As an adherend, to which the water activatable label of the invention is applied, a returnable bottle (such as a glass bottle), which is returned after use and washed for reusing is assumed, but the adherend is not limited thereto, and the water activatable label may be applied to various adherends, preferably a container. Examples of the container include ones formed of glass, ceramics, pottery or porceline, plastics, and a metal, such as steel or aluminum. Among these, a glass bottle and a pottery or porceline bottle are preferred due to good wettability thereof to the aqueous adhesive.

### Water Activatable Label Applying Apparatus

For applying the water activatable label to the adherend, such a method may be possibly performed by hand that the adhesive layers of the labels are wetted with water one by one, and then the labels are applied to the adherends one by one, but the method is not efficient.

The application of the label may be generally performed by using an automated label applying apparatus (i.e., a labeler, as described, for example, in JP-A 8-58755, JP-A 11-321831, JP-A 2000-25725 and the like). Accordingly, the invention also relates to an automated label applying apparatus that automatically performs the reactivation of the adhesive layer of the label and the application of the label to the adherend as a series of operations.

Specifically, the water activatable label applying apparatus supplies water to the adhesive layer of the water activatable label to reactivate the adhesive layer, and then applies the label to the adherend.

More specifically, as shown in Fig. 4, the water activatable label applying apparatus 10 contains at least a rotary driven applying drum 18 and a water supplying unit 11, the applying drum sucks and holds the water activatable label 15 or 31, which has been supplied to a prescribed position of the applying drum, in a state where the adhesive layer thereof is directed outward, and then conveys the water activatable label to a position on the water supplying unit 11 through rotation of the drum, the water supplying unit coats or sprays water to the adhesive layer to reactivate the adhesive layer, and the applying drum conveys the water activatable label to the adherend 30 through rotation of the drum, and presses the water activatable label onto the adherend and simultaneously terminates the suction, thereby applying the water activatable label to the adherend.

The water activatable label applying apparatus 10 may further contains a label magazine 14 and a label delivery roll 20 as a label delivery device 19.

By using the label delivery device, plural sheets of the labels 15 cut into a prescribed size, preferably a size having a major diameter of from 30 to 450 mm, are set in the label magazine 14, and the label can be continuously delivered to the applying drum 18 through the label delivery roll 20.

The water activatable label applying apparatus 10 may further contains a label cutting device 21 and a label delivery roll 20 as a label delivery device 19.

The water activatable label, which has been rolled into a roll, is delivered to the label cutting device, such as a rotary cutter, and cut into a prescribed size, preferably a size having a major diameter of from 30 to 450 mm, by the punching device, and the cut label can be continuously delivered to the applying drum through the label delivery roll.

The water supplying unit in the water activatable label applying apparatus of the invention preferably contains at least one of a humidifying device, a mist sprayer and a water supplying roll. The water supplying unit preferably contains a combination of a humidifying device and a water supplying roll, or a combination of a mist sprayer and a water supplying roll. In the embodiment of the water activatable label applying apparatus shown in Fig. 4, a water supplying unit 11 containing a mist sprayer 13 and a water supplying roll 12 is employed.

By using the water supplying roll, a large amount of water may be coated on the adhesive layer of the label to facilitate the reactivation of the adhesive layer. The water supplying roll may have on a surface thereof a relief pattern, with which water may be coated in the pattern on the adhesive layer of the label, thereby controlling the initial adhesion force and the like. Examples of the relief pattern include dots, stripes and the like that are formed continuously in the peripheral direction of the water supplying roll. The water supplying roll used may be an ordinary water supplying roller, such as a rubber roller and a moulton roller.

The water that is supplied from the water supplying unit of the water activatable label applying apparatus to the adhesive layer of the label and is used for reactivation of the adhesive layer of the label is preferably tap water or well water controlled to a temperature of from 30 to 80°C, and more preferably tap water controlled to a temperature of from 40 to 60°C.

The water having a temperature in the range may easily achieve the reactivation of the adhesive layer. When the temperature is less than 30°C, there is a tendency that the adhesive layer may be hard to be reactivated to provide a poor initial adhesion force of the label. When the temperature exceeds 80°C, there is a tendency that the workability may be deteriorated due to the possibility of burn injury of the operator.

The amount of water that is supplied from the water supplying unit of the water activatable label applying apparatus to the adhesive layer of the label and reactivates the adhesive layer is preferably 0.1 g/m² or more, and more preferably 0.3 g/m² or more, and is preferably 7 g/m² or less, and more preferably 1 g/m² or less. When the amount of water is in the preferred range, there is a tendency that the reactivation of the adhesive layer may be achieved more easily. When the amount is less than 0.1 g/m², there is a tendency that the adhesive layer may be hard to be reactivated to provide a poor initial adhesion force of the label. When the amount exceeds 7 g/m², there is a tendency that the amount of water may be saturated to make the label floating up, and the drying may require a prolonged period of time.

The water activatable label applying apparatus of the invention may further contain an adherend transferring device as a supplying device for the adherend.

Specific examples of the transferring device include a transferring conveyer, which may deliver the adherend continuously to the applying apparatus at a rate of from 1 to 1,500 per minute. The aforementioned applying rate is determined in consideration of the tendency that the reactivation rate of the adhesive layer of the label may be a rate-determining step, but it is considered that the rate may be exceeded by modifying the apparatus, for example, the applying drum may retain plural labels and may apply them continuously.

### Adherend having Label

An adherend having a label, which is obtained by using the aforementioned water activatable label and the aforementioned adherend preferably with the aforementioned water activatable label applying apparatus, has a sufficient adhesion strength between the adherend and the label. The adherend having a label is preferably a container having a label, which has such an advantage that the container suffers no wrinkle of the label and no effusion of the adhesive due to dew condensation, and the label is easily stripped off on stripping off the label after recovering the container, causes less adhesive deposits on the container, and causes less contamination of cleaning water.

Specifically, the adhesion strength between the label and the adherend measured with a tensile strength tester after storing under an environment of an ambient temperature of 25°C and a relative humidity of 50% for one week is preferably 200 gf/15 mm or more, more preferably 250 gf/15 mm or more, and further preferably 300 gf/15 mm or more, and is preferably 500 gf/15 mm or less, more preferably 450 gf/15 mm or less, and further preferably 400 gf/15 mm or less. When the adhesion strength between the label and the adherend under the environment is 200 gf/15 mm or more, there is a tendency that the label may be hard to float up due to the dew condensation condition, and when the adhesion strength is 500 gf/15 mm or less, there is a tendency that the label may be easily stripped off on stripping the label after recovering the container.

### Utilization Mode of Container having Label

Various contents may be charged in the container having a label of the invention. Examples of the contents not only include beverages, such as mineral water, refreshing beverages, wine, beer, sake (Japanese rice wine) and distilled liquor, but also include edible oil, seasonings, shampoo, hair conditioner, liquid cosmetics, detergents, wax, bactericides, antiseptic solutions, brightening agents, machine oil and engine oil.

Preferred examples of the container include containers for beverages, such as mineral water, refreshing beverages, wine, beer, sake (Japanese rice wine) and distilled liquor, and the vacant container, from which the content has been completely discharged off, may be recovered and reused. At this time, the label of the invention may be easily stripped off and separated from the container, and only less amount of adhesive deposits may remain on the surface of the container. Accordingly, the container having a label of the invention may reduce the cost for recycling and thus is economically advantageous.

### Example

The features of the invention will be described more specifically with reference to examples and comparative examples below. The materials, the amount thereof used, the ratios, the contents of processes, the procedures of processes, and the like may be changed appropriately unless they deviate from the substance of the invention. Accordingly, the scope of the invention shall not construed as being limited to the specific examples shown below.

In the examples, according to the procedures shown below, a paper material containing a water absorbing layer was produced, and an adhesive layer was formed on the surface of the water absorbing layer to provide a water activatable sheet, which was then punched into a desired size and shape to prepare a water activatable label, and the label was applied to an adherend by using a water activatable label applying apparatus to produce an adherend having a label.

The paper materials, the water activatable labels and the adherends having a label were subjected to evaluation shown below.

Table 1 shows the details of the materials used. In the table, "MFR" means melt flow rate. Table 2 shows the species and the amount mixed (% by weight) of the material used in the production of the paper materials, the production conditions, and the liquid absorption volumes of the resulting paper materials. Table 3 shows the species of the paper materials and the aqueous adhesives used in the production of the water activatable labels, and the evaluation results of the labels and the adherends having a label produced. The production example numbers of the paper materials shown in Table 3 correspond to the production example numbers shown in Table 2.

**Table 1**

| No. | Name of material | Content |
|---|---|---|
| 1 | propylene homopolymer | propylene homopolymer (Novatec PP FY4, trade name, produced by Japan Polypropylene Corporation, MFR: 5 g/10 min (230°C, 2.16 kg load), melting point: 164°C (DSC peak temperature)) |
| 2 | high density polyethylene | high density polyethylene (Novatec HD HJ360, trade name, produced by Japan Polyethylene Corporation, MFR: 5.5g/10min (190°C, 2.16 kg load), melting point: 132°C (DSC peak temperature)) |
| 3 | acid-modified polyolefin resin | maleic anhydride-modified polypropylene (Yumex 1001, trade name, produced by Sanyo Chemical Industries, Ltd., maleic acid modification rate: 5%, softening point: 154°C) |
| 4 | heavy calcium carbonate | dry-pulverized heavy calcium carbonate (Softon 1800, trade name, produced by Bihoku Funka Kogyo Co., Ltd., average particle diameter: 1.25 µm (air permeation method)) |
| 5 | hydrophilized calcium carbonate | wet-pulverized calcium carbonate having surface hydrophilized with cationic surfactant (AFF-Z, trade name, produced by Fimatec Ltd., average particle diameter: 1 µm (microtrack method) |
| 6 | colloidal calcium carbonate | synthesized colloidal calcium carbonate (Kalfine YM15, produced by Maruo Calcium Co., Ltd., average particle diameter: 0.1 µm (air permeation method)) |
| a | aqueous adhesive | polyvinyl alcohol rewettable adhesive (J-Poval JP-20, trade name, produced by Japan VAM & Poval Co., Ltd., viscosity: ca. 32 mPa·s) |
| b | aqueous adhesive | polyvinyl alcohol rewettable adhesive (Kraray Poval PVA217, trade name, produced by Kraray Co., Ltd., viscosity: ca. 22 mPa·s) |
| C | aqueous adhesive | polyvinyl alcohol rewettable adhesive (KS-0515E60, prototype, produced by Hokkoku Koryou Kougyou Co., Ltd., viscosity: ca. 200 mPa·s) |

### Production of Paper Material

### Production Example 1

The mixture of the water absorbing layer and the mixture of the printable layer shown in Table 2 were each melted and kneaded in two extruders set at 250°C, and the mixtures were each laminated in a die, molded into an extruded sheet, and cooled with a cooling device to 70°C, thereby providing a non-stretched multilayer resin film.

The film was heated and then stretched with multiple rolls in the machine direction at the stretching ratio shown in Table 2 at the stretching temperature (1) shown in Table 2. Thereafter, the film was heat-treated with a roll set at a temperature that was higher than the stretching temperature (1) by 20°C and then cooled, thereby providing a multilayer stretched resin film. The resulting multilayer stretched resin film was subjected to a corona treatment at 40 W/m²·min on both surfaces thereof with a discharge treatment machine (produced by Kasuga Electric Works Ltd.), thereby providing a uniaxially stretched/uniaxially stretched paper material having the thickness shown in Table 2 (see Fig. 2).

### Production Examples 2 to 4 and 7 to 10

The mixture of printable layer shown in Table 2 was melted and kneaded in an extruder set at 250°C, molded into an extruded sheet, and cooled with a cooling device to 70°C, thereby providing a non-stretched single layer film. The film was heated to the stretching temperature (1) shown in Table 2, and then stretched with multiple rolls in the machine direction at the stretching ratio shown in Table 2, thereby providing a machine-direction uniaxially stretched film.

Subsequently, the mixture of the water absorbing layer shown in Table 2 was melted and kneaded in an extruder set at 250°C, and laminated on one surface of the machine-direction uniaxially stretched film, and then the film was heated to the stretching temperature (2) shown in Table 2, then stretched with a tenter stretcher in the transversal direction at the stretching ratio shown in Table 2, heat-treated at a temperature that was higher than the stretching temperature (2) by 20°C, and then cooled, thereby providing a multilayer stretched resin film. The resulting film was subjected to a corona treatment at 40 W/m²·min on both surfaces thereof with a discharge treatment machine (produced by Kasuga Electric Works Ltd.), thereby providing a biaxially stretched/uniaxially stretched paper material having the thickness shown in Table 2 (see Fig. 2).

### Production Example 5

The mixture of the water absorbing layer and the mixture of the printable layer shown in Table 2 were each melted and kneaded in two extruders set at 250°C, and the mixtures were each laminated in a die, molded into an extruded sheet, and cooled with a cooling device to 70°C, thereby providing a non-stretched multilayer resin film.

The film was heated and then stretched with multiple rolls in the machine direction. The resulting stretched film was then stretched with a tenter stretcher in the transversal direction. The stretching temperatures and the stretching ratios herein were those shown in Table 2. After the transversal stretching, the film was heat-treated at a temperature that was higher than the stretching temperature (2) by 20°C and then cooled, thereby providing a multilayer stretched resin film. The resulting film was subjected to a corona treatment at 40 W/m²·min on both surfaces thereof with a discharge treatment machine (produced by Kasuga Electric Works Ltd.), thereby providing a biaxially stretched/biaxially stretched paper material having the thickness shown in Table 2 (see Fig. 2).

### Production Example 6

The mixture of the base material layer shown in Table 2 was melted and kneaded in an extruder set at 250°C, molded into an extruded sheet, and cooled with a cooling device to 70°C, thereby providing a non-stretched single layer film. The film was heated to the stretching temperature (1) shown in Table 2, and then stretched with multiple rolls in the machine direction at the stretching ratio shown in Table 2, thereby providing a machine-direction uniaxially stretched film.

Subsequently, the mixtures of the water absorbing layer and the printable layer shown in Table 2 were each melted and kneaded in extruders set at 250°C, and each extrusion-laminated on both surface of the machine-direction uniaxially stretched film, respectively, and then the film was heated to the stretching temperature (2) shown in Table 2, then stretched with a tenter stretcher in the transversal direction at the stretching ratio shown in Table 2, heat-treated at a temperature that was higher than the stretching temperature (2) by 20°C, and then cooled, thereby providing a multilayer stretched resin film. The resulting multilayer stretched resin film was subjected to a corona treatment at 40 W/m²·min on both surfaces thereof with a discharge treatment machine (produced by Kasuga Electric Works Ltd.), thereby providing a uniaxially stretched/biaxially stretched/uniaxially stretched paper material having the thickness shown in Table 2 (see Fig. 3).

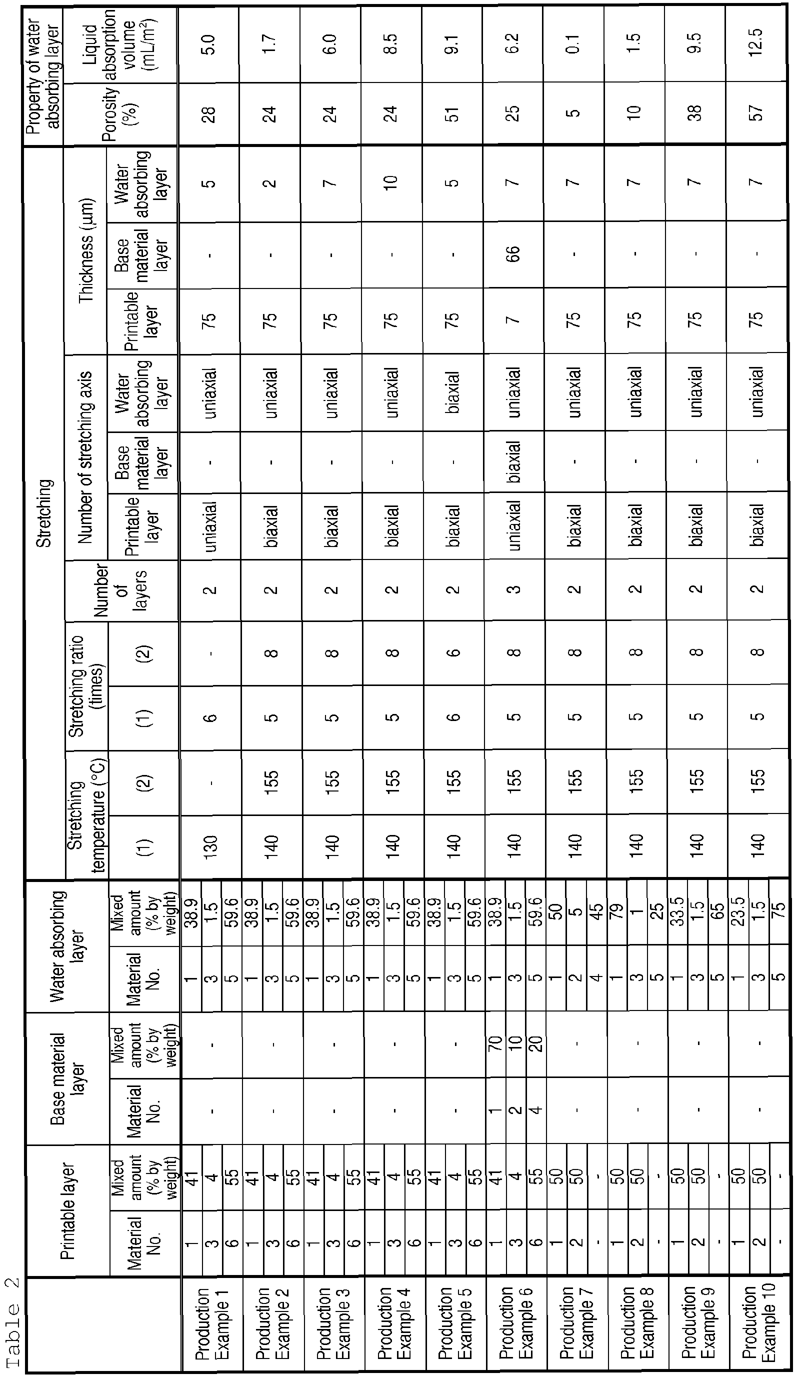

### Production of Water Activatable Sheet by forming Adhesive Layer Examples 1 to 11 and Comparative Examples 1 to 4

Water activatable sheets were produced according to the combinations shown in Table 3 of the paper materials obtained in the production examples shown in Table 2 and the aqueous adhesives shown in Table 1. The production was performed continuously from printing to the water activatable sheet as a series of operations.

Specifically, the paper material, which had been slit into a width of 300 mm and wound into a roll, was unwound and delivered, a 50% halftone dot pattern was printed by rotary seal printing on the surface thereof on the side of the printable layer with an UV ink (UV161 Black S, a trade name, produced by T&K TOKA Corporation) at a printing speed of 30 m/min, and a release varnish (UV release OP varnish UP-200, a trade name, produced by T&K TOKA Corporation) was further coated on the printing in an amount of 0.25 cc/m². Thereafter, continuously, the aqueous adhesive was coated on the surface of the paper material on the side of the water absorbing layer to a solid content of 5.5 g/m² by using an anilox roll having a lattice trapezoidal cell shape with 85 lines per inch and a depth of 120 µm and a gravure coater, and dried in an oven at 50°C for 15 seconds to form an adhesive layer, and the coated material was again wound to provide the water activatable sheets of Examples 1 to 11 and Comparative Examples 1 to 4. In the water activatable sheets, the aqueous adhesive was solidified by drying in the state where the aqueous adhesive was partially absorbed along with the aqueous solvent by the water absorbing layer, thereby providing the state shown in the schematic diagram in Fig. 1.

### Production of Adherend having Label

The water activatable sheets of Examples 1 to 11 and Comparative Examples 1 to 4 shown in Table 3 were each punched into a rectangular shape of 130 mm x 110 mm to prepare a water activatable label, and by using the label, a glass bottle with an interior content of 360 mL having a perimeter of 200 mm at the application position as an adherend, a water activatable label applying apparatus shown in the schematic diagram in Fig. 4, and tap water controlled to have a temperature of 45°C, an adherend having a label was produced in such a manner that the adhesive layer of the label was reactivated by supplying the warm water thereto in an amount of 0.3 g/m², and immediately the label was applied to the body portion of the glass bottle. The production was able to be performed stably at a production rate of 100 per minute.

Examples 12 to 16 and Comparative Examples 5 to 7 shown in Table 3 were examples where the water activatable label of Example 6 or Example 11 was used, and the reactivation conditions in the water activatable label applying apparatus were changed. In these cases, the test was performed by changing the water temperature or the amount of water supplied with the production rate being not changed. These examples are considered to be examples and comparative examples of the water activatable label applying apparatus.

In Comparative Example 5, the amount of warm water supplied to the adhesive layer of the label was an excessively small amount of 0.05 g/m². In Comparative Example 6, the amount of warm water supplied to the adhesive layer of the label was an excessively large amount of 8 g/m².

### Evaluation

### Porosity of Water Absorbing Layer of Paper Material

The paper material obtained in Production Examples was solidified by embedding in an epoxy resin and cut with a microtome while cooling and preventing the pores from being collapsed to form a cut surface (observation surface) perpendicular to the thickness direction of the paper material. Gold was vapor-deposited on the cut surface, which was then mounted on an observation pedestal and photographed with a scanning microscope (Model name: SM-200, produced by Topcon Corporation) at a magnification of 2,000. The resulting photograph was loaded as image data, and the image was analyzed with an image analyzer (Model name: Luzex AP, produced by Nireco Corporation) to obtain an area ratio of the pore, which was designated as the porosity of the water absorbing layer of the paper material. The results are shown in Table 2.

### Liquid Absorption Volume of Water Absorbing Layer of Paper Material

The liquid absorption volume of the surface on the side of the water absorbing layer of the paper material obtained in Production Examples was measured according to "Japan TAPPI No. 51:2000" (Paper pulp test method No. 51:2000, Bristow method, Japan Technical Association of the Pulp and Paper Industry). In the invention, a measured value with an absorption time within 2 seconds was designated as the liquid absorption volume. The results are shown in Table 2.

### Initial Adhesion Strength of Water Activatable Label to Adherend

The water activatable sheets of Examples 1 to 16 and Comparative Examples 1 to 7 were each cut into a strip shape having a width of 15 mm to prepare a test piece (water activatable label), the adhesive layer of which was reactivated by spraying warm water at a temperature of approximately 45°C thereto in an amount of approximately 0.3 g/m², and immediately the test piece was applied to a glass plate having a thickness of 2 mm, thereby preparing a specimen for measuring the adhesion strength. At this time, a portion of approximately 40 mm at the end of the test piece was not applied to the glass plate.

The specimen after applying was stored under an environment of an ambient temperature of 25°C and a relative humidity of 50% for one week, and then the peeling adhesion strength (gf) was measured in such a manner that the end of the glass plate and the end of the test piece were each fixed to a chuck of a tensile tester (Type RTM, produced by Orientec Co., Ltd.), and the test piece was pulled in a direction at 180° with respect to the glass plate at a speed of 200 mm/min. The adhesion strength thus measured was designated as the initial adhesion strength and evaluated by the following six levels.

### C: exceeding 500 gf/15 mm

The label may not be peeled off immediately after labeling and in the dew condensation test, but may be difficult to be stripped off from the adherend.

### A: exceeding 450 gf/15 mm and 500 gf/15 mm or less

The label may not be peeled off immediately after labeling and in the dew condensation test, but the aqueous adhesive may slightly remain on the container on stripping off the label from the container.

### AA: from 300 to 450 gf/15 mm

The label may not be peeled off immediately after labeling and in the dew condensation test, and the label may be easily stripped off from the container after use.

### A: 200 gf/15 mm or more and less than 300 gf/15 mm

The label may not be peeled off immediately after labeling and in the dew condensation test, but the label may be stripped off slightly lightly (with no practical problem).

### B: 10 gf/15 mm or more and less than 200 gf/15 mm

Wrinkles may occur due to deviation and floating of the label immediately after labeling and in the dew condensation test.

### C: less than 10 gf/15 mm

The label may be peeled off immediately after labeling.

### Presence of Wrinkles of Label and Effusion of Adhesive due to Dew Condensation

The adherends having a label produced with the water activatable labels of Examples 1 to 16 and Comparative Examples 1 to 7 after production were each conditioned at an ambient temperature of 25°C and a relative humidity of 50% for one week, and then subjected to sufficient dew condensation under condition of an ambient temperature of 40°C and a relative humidity of 80%. The label was visually observed for the presence of wrinkles of the label and effusion of the adhesive, and evaluated by the following two levels. The results are shown in Table 3.
A: Wrinkles on the label and effusion of the adhesive around the label were not observed.
C: Wrinkles on the label and/or effusion of the adhesive around the label were observed.

### Presence of Adhesive Deposits on Adherend after stripping off Label

The adherends having a label produced with the water activatable labels of Examples 1 to 16 and Comparative Examples 1 to 7 after production were each conditioned at an ambient temperature of 25°C and a relative humidity of 50% for one week, and then the label was stripped off with a hand from the adherend at room temperature. The state of the surface of the adherend after stripping off was visually observed, and evaluated by the following four levels. The results are shown in Table 3.
AA: The aqueous adhesive did not remain on the container.
A: The aqueous adhesive slightly remained on the container, but was easily washed off with warm water at 40°C.
B: A residue of the water absorbing layer and the aqueous adhesive slightly remained on the container.
C: A residue of the water absorbing layer and the aqueous adhesive remained over the entire adhered surface.

### Anti-blocking Property of Labels

The water activatable label of the invention is also excellent in anti-blocking property. The anti-blocking property may be evaluated by measuring the shear strength of the stacked labels. In the case where the labels are blocked, the shear strength may become large. The shear strength is preferably from 0 to 200 gf/15 mm, more preferably from 0 to 100 gf/15 mm, and particularly preferably from 0 to 10 gf/15 mm. When the shear strength is 200 gf/15 mm or less, the blocking is hard to occur, and the labeling operation (i.e., the applying operation to an adherend) may be less affected thereby.

Specifically, the water activatable sheet was cut into a size of 80 mm in length and 15 mm in width to prepare 20 sheets of specimens, which were stacked in sequence with the surface on the side of the adhesive layer of one specimen being in contact with the surface of the printable layer of another specimen adjacent thereto, thereby preparing a stack. A load of 500 gf/cm² was applied to the stack on the uppermost surface and the lowermost surface of the stack, and the stack was conditioned in an environment of an ambient temperature of 50°C and a relative humidity of 50% for 24 hours. Thereafter, three combinations each containing two sheets of the specimens, i.e., the eighth and ninth sheets, the tenth and eleventh sheets, and the twelfth and thirteenth sheets, were collected from the uppermost surface of the stack while preventing each of the sheets from being peeled off from each other. In each of the combinations, the specimens were each fixed to a chuck of a tensile tester (Type RTM, produced by Orientec Co., Ltd.), and specimens were measured for peeling adhesion strength (gf) at a tensile speed of 50 mm/min. The anti-blocking property was evaluated based on the measurement results by the following three levels.
AA: from 0 to 10 gf/15 mm
   No blocking occurred.
A: more than 10 gf/15 mm and 200 gf/15 mm or less
   Blocking slightly occurred, but the specimens were easily peeled off from each other and were capable of being used for printing and labeling without any problem.
C: more than 200 gf/15 mm
   The specimens were not usable due to severe blocking.

**Table 3**

| | Paper material | Aqueous adhesive No. | Aqueous adhesive | | Reactivation condition | | | Evaluation of water activatable label | | | | Evaluation of adherend having label | |
|---|---|---|---|---|---|---|---|---|---|---|---|---|---|
| | | | Coated amount (g/m²) | Coated pattern (area ratio) | Water spraying method | Coated pattern (area ratio) | Water temperature (°C) | Initial adhesion strength | | Anti-blocking property | | Wrinkles and effusion of adhesive due to dew condensation | Adhesive deposits on adherend after peeling |
| | | | | | | | | Adhesion strength (gf/15 mm) | Evaluation | Shear strength (gf/15 mm) | Evaluation | | |
| Example 1 | Production Example 1 | a | 10 | solid (100%) | supplied with roll | solid (100%) | 45 | 450 | AA | 10 | AA | A | A |
| Example 2 | Production Example 2 | a | 10 | solid (100%) | supplied with roll | solid (100%) | 45 | 450 | AA | 100 | A | A | AA |
| Example 3 | Production Example 3 | a | 10 | solid (100%) | supplied with roll | solid (100%) | 45 | 450 | AA | 10 | AA | A | AA |
| Example 4 | Production Example 4 | a | 10 | solid (100%) | supplied with roll | solid (100%) | 45 | 450 | AA | 10 | AA | A | A |
| Example 5 | Production Example 5 | a | 10 | solid (100%) | supplied with roll | solid (100%) | 45 | 300 | AA | 50 | A | A | A |
| Example 6 | Production Example 6 | a | 10 | solid (100%) | supplied with roll | solid (100%) | 45 | 450 | AA | 0 | AA | A | AA |
| Comparative Example 1 | Production Example 7 | a | 10 | solid (100%) | supplied with roll | solid (100%) | 45 | 200 | A | 200 | C | C | AA |
| Example 7 | Production Example 8 | a | 10 | solid (100%) | supplied with roll | solid (100%) | 45 | 450 | AA | 100 | A | A | AA |
| Example 8 | Production Example 9 | a | 10 | solid (100%) | supplied with roll | solid (100%) | 45 | 450 | AA | 10 | AA | A | A |
| Comparative Example 2 | Production Example 10 | a | 10 | solid (100%) | supplied with roll | solid (100%) | 45 | 500 | C | 10 | AA | A | B |
| Comparative Example 3 | Production Example 6 | b | 1 | dots (25%) | supplied with roll | solid (100%) | 45 | 150 | B | 0 | AA | A | AA |
| Example 9 | Production Example 6 | b | 7 | dots (50%) | supplied with roll | solid (100%) | 45 | 400 | AA | 0 | AA | A | AA |
| Example 10 | Production Example 6 | b | 25 | solid (100%) | supplied with roll | solid (100%) | 45 | 450 | AA | 10 | AA | A | A |
| Example 11 | Production Example 6 | c | 20 | dots (50%) | supplied with roll | solid (100%) | 45 | 450 | AA | 10 | AA | A | AA |
| Comparative Example 4 | Production Example 6 | b | 35 | solid (100%) | supplied with roll | solid (100%) | 45 | 200 | A | 100 | A | C | C |
| Example 12 | Production Example 6 | c | 10 | dots (50%) | mist directly sprayed | solid (100%) | 45 | 200 | A | 0 | AA | A | AA |
| Example 13 | Production Example 6 | a | 10 | solid (100%) | supplied with roll | stripes (50%) | 45 | 400 | AA | 10 | AA | A | AA |
| Example 14 | Production Example 6 | c | 10 | dots (50%) | supplied with roll | stripes (50%) | 45 | 400 | AA | 0 | AA | A | AA |
| Comparative Example 5 | Production Example 6 | c | 10 | dots (50%) | supplied with roll | stripes (10%) excessively small amount | 45 | 0 | C | 0 | AA | A | AA |
| Comparative Example 6 | Production Example 6 | c | 10 | dots (50%) | mist directly sprayed | solid (100%) excessively large amount | 45 | 50 | C | 0 | AA | A | AA |
| Comparative Example 7 | Production Example 6 | c | 10 | dots (50%) | supplied with roll | stripes (50%) | 10 | 200 | B | 0 | AA | A | AA |
| Example 15 | Production Example 6 | c | 10 | dots (50%) | supplied with roll | stripes (50%) | 35 | 400 | AA | 0 | AA | A | AA |
| Example 16 | Production Example 6 | c | 10 | dots (50%) | supplied with roll | stripes (50%) | 70 | 400 | AA | 0 | AA | A | AA |

### Industrial Applicability

The water activatable sheet of the invention solves the ordinary art problem that much labor is required for applying a glue label, and may suffer less blocking.

Furthermore, as apparent from the results shown in Table 3, the water activatable label that satisfies the requirements of the invention suffers no wrinkle of the label and no effusion of the adhesive due to dew condensation after applying the label to an adherend such as a container, is easily stripped off from the adherend when the label is necessarily stripped off, and solves the problem of adhesive deposits remaining on the adherend and contamination of cleaning water, thereby facilitating separation of the label from the adherend. Accordingly, the invention has high industrial applicability.

### Reference Sign List

- 1: water activatable sheet and water activatable label
- 2: printable layer
- 3: water absorbing layer
- 4: adhesive layer
- 5: base material layer
- 6: paper material
- 10: water activatable label applying apparatus
- 11: water supplying unit
- 12: water supplying roll
- 13: mist sprayer
- 14: label magazine
- 15: cut water activatable label
- 16: adherend transferring device
- 17: adherend having label
- 18: applying drum
- 19: label delivery device
- 20: label delivery roll
- 21: label cutting device
- 22: water activatable label wound into roll
- 23: label table
- 30: adherend
- 31: water activatable label

## Claims

1. A water activatable label comprising a water activatable sheet **characterized in that** the sheet contains a paper material having on at least one surface thereof a porous water absorbing layer that has a liquid absorption volume of from 1 to 10 mL/m² determined according to Japan TAPPI No. 51:2000 (paper pulp test method No. 51:2000, Bristow method, Japan Technical Association of the Pulp and Paper Industry), using as the liquid absorption volume a measured value with an absorption time within 2 seconds, further having provided on the water absorbing layer an adhesive layer containing an aqueous adhesive coated and solidified by drying, wherein the adhesive layer is provided to have a thickness of from 0.1 to 30 g/m² on the water absorbing layer.

2. The water activatable label according to claim 1, wherein the water absorbing layer contains a resin stretched film that contains a thermoplastic resin and inorganic fine powder having a hydrophilized surface, and is rendered porous by stretching.

3. The water activatable label according to claim 1 or 2, wherein the water absorbing layer contains a resin stretched film that contains from 30 to 80% by weight of a polyolefin resin and from 20 to 70% by weight of calcium carbonate powder having an average particle diameter of from 0.1 to 2 µm having a surface that is hydrophilized with a cationic surfactant, and is rendered porous by stretching at a temperature that is lower than a melting point of the polyolefin resin.

4. The water activatable label according to claim 3, wherein the cationic surfactant is a cationic vinyl copolymer obtained by copolymerization of an amine salt containing at least one of a diallylamine salt and an alkyldiallylamine salt and a hydrophilic vinyl monomer.

5. The water activatable label according to any one of claims 2 to 4, wherein the water absorbing layer further contains an acid modified polyolefin resin.

6. The water activatable label according to any one of claims 1 to 5, wherein the water absorbing layer has a porosity of from 20 to 55% and a thickness of from 1 to 10 µm.

7. The water activatable label according to any one of claims 1 to 6, wherein the aqueous adhesive contains at least one kind selected from the group consisting of starch and a derivative thereof, pullulan, glue, gelatin, casein, methyl cellulose, carboxymethyl cellulose, gum arabic, traganth gum, guar gum, sodium alginate, polyvinyl alcohol, polyvinyl ether, polyvinyl pyrrolidone, polyacrylic acid and a salt thereof, polyacrylic acid amide, polyacrylate ester, water soluble polyurethane, and an ethylene-vinyl acetate resin.

8. The water activatable label according to any one of claims 1 to 7, wherein the adhesive layer is provided to have a thickness of from 1 to 25 g/m² on the water absorbing layer.

9. The water activatable label according to any one of claims 1 to 8, wherein the adhesive layer is provided in a pattern having an area ratio of from 30 to 95% on the water absorbing layer, and the pattern is selected from dots, stripes, a lattice and a checkerboard.

10. The water activatable label according to any one of claims 1 to 9, wherein the paper material contains a multilayer stretched resin film including a film stretched at least biaxially, the liquid absorption volume of the water absorbing layer is from 1 to 6.2 mL/m², and the coating amount of the aqueous adhesive is from 1 to 10 g/m².

11. The water activatable label according to any one of claims 1 to 10, wherein the paper material has on one surface thereof the porous water absorbing layer and on the other surface thereof a printable layer, and the printable layer has printing thereon.

12. The water activatable label according to any one of claims 1 to 11, wherein the water absorbing layer on the paper material has printing thereon, and the adhesive layer contains the aqueous adhesive coated and solidified by drying on the printing.

13. The water activatable label according to claim 11 or 12, wherein the printing is selected from UV seal printing, UV flexographic printing, UV rotary offset printing, UV screen printing and UV ink-jet printing.

14. The water activatable label according to claim 11, which further contains a release varnish layer provided on the printing.

15. The water activatable label according to any one of claims 1 to 14, applied to an adherend selected from the group consisting of a glass bottle, a pottery or porceline bottle, a plastic container and a metal container.

16. A method for producing the water activatable label of Claim 11, containing: printing on the printable layer of the paper material having on one surface thereof the porous water absorbing layer and on the other surface thereof a printable layer; and within a process of printing, coating and solidifying by drying an aqueous adhesive on the water absorbing layer of the paper material to provide the adhesive layer.

17. An adherend having a label, containing the water activatable label of Claim 15 applied to the adherend, and having an adhesion strength between the label and the adherend of from 200 to 500 gf/15 mm after storing under an environment of 25°C and 50%RH for one week, the adhesion strength being measured as given in the description under the heading "Initial Adhesion Strength of Water Activatable Label to Adherend".

## Patentansprüche

1. Wasseraktivierbares Etikett, umfassend einen wasseraktivierbaren Bogen, der **dadurch gekennzeichnet ist, dass** der Bogen ein Papiermaterial enthält, das auf mindestens einer Oberfläche davon eine poröse wasserabsorbierende Schicht mit einem Flüssigkeitsabsorptionsvolumen von 1 bis 10 mL/m² aufweist, das nach dem Japan TAPPI Nr. 51:2000 (Papierzellstoff Testmethode Nr. 51:2000, Bristow-Verfahren, Japan Technical Association of the Pulp and Paper Industry) bestimmt wurde, wobei als das Flüssigkeitsabsorptionsvolumen ein gemessener Wert mit einer Absorptionszeit innerhalb von 2 Sekunden verwendet wird, ferner aufweisend eine auf der wasserabsorbierenden Schicht bereitgestellte Adhäsionsschicht, die ein darauf beschichtetes und durch Trocknen verfestigtes wässriges Haftmittel enthält, wobei die Adhäsionsschicht in einer Stärke von 0,1 bis 30 g/m² auf der wasserabsorbierenden Schicht vorliegt.

2. Wasseraktivierbares Etikett nach Anspruch 1, wobei die wasserabsorbierende Schicht einen gestreckten Harzfilm enthält, der ein thermoplastisches Harz und anorganisches Feinpulver mit einer hydrophyilisierten Oberfläche enthält und der durch Strecken porös gemacht ist.

3. Wasseraktivierbares Etikett nach Anspruch 1 oder 2, wobei die wasserabsorbierende Schicht einen gestreckten Harzfilm enthält, der 30 bis 80 Gewichts-% eines Polyolefin-Harzes und 20 bis 70 Gewichts-% Calciumcarbonatpulver mit einem mittleren Partikeldurchmesser von 0,1 bis 2 µm enthält, das eine mit einem kationischen grenzflächenaktiven Stoff hydrophyilisierte Oberfläche aufweist, und der durch Strecken bei einer Temperatur, die niedriger als ein Schmelzpunkt des Polyolefin-Harzes ist, porös gemacht ist.

4. Wasseraktivierbares Etikett nach Anspruch 3, wobei der kationische grenzflächenaktive Stoff ein kationisches Vinyl-Copolymer ist, das durch Copolymerisation eines Amin-Salzes erhalten wird, das zumindest eines aus einem Diallylamin-Salz und einem Alkyldiallylamin-Salz und ein hydrophiles Vinylmonomer enthält.

5. Wasseraktivierbares Etikett nach einem der Ansprüche 2 bis 4, wobei die wasserabsorbierende Schicht ferner ein säuremodifiziertes Polyolefin-Harz enthält.

6. Wasseraktivierbares Etikett nach einem der Ansprüche 1 bis 5, wobei die wasserabsorbierende Schicht eine Porosität von 20 bis 55% und Stärke von 1 bis 10 µm aufweist.

7. Wasseraktivierbares Etikett nach einem der Ansprüche 1 bis 6, wobei das wässrige Haftmittel zumindest eines ausgewählt aus der Gruppe, die aus Stärke und einem Derivat hiervon, Pullulan, Klebstoff, Gelatine, Kasein, Methylcellulose, Carboxymethylcellulose, Gummiarabikum, Traganth Gummi, Guarkernmehl, Natriumalginat, Polyvinylalkohol, Polyvinylether, Polyvinylpyrrolidon, Polyacrylsäure und ein Salz hiervon, Polyacrylsäureamid, Polyacrylatester, wasserlösliches Polyurethan und einem Ethylenvinylacetat-Harz besteht, enthält.

8. Wasseraktivierbares Etikett nach einem der Ansprüche 1 bis 7, wobei die Adhäsionsschicht vorgesehen ist, um eine Stärke von 1 bis 25 g/m² auf der wasserabsorbierenden Schicht aufzuweisen.

9. Wasseraktivierbares Etikett nach einem der Ansprüche 1 bis 8, wobei die Adhäsionsschicht in einem Muster auf der wasserabsorbierenden Schicht bereitgestellt wird, das ein Flächenverhältnis von 30 bis 95% aufweist, und das Muster aus Punkten, Streifen, einem Gitter und einem Schachbrettmuster ausgewählt wird.

10. Wasseraktivierbares Etikett nach einem der Ansprüche 1 bis 9, wobei das Papiermaterial einen mehrlagigen, gestreckten Harzfilm enthält, der einen zumindest biaxial gestreckten Film aufweist, das Flüssigkeitsabsorptionsvolumen der wasserabsorbierenden Schicht 1 bis 6,2 mL/m² beträgt, und die Beschichtungsmenge des wässrigen Haftmittels 1 bis 10 g/m² beträgt.

11. Wasseraktivierbares Etikett nach einem der Ansprüche 1 bis 10, wobei das Papiermaterial auf einer Oberfläche desselben die poröse wasserabsorbierende Schicht aufweist, und auf der anderen Oberfläche desselben eine druckbare Schicht aufweist, und wobei die druckbare Schicht einen Druck darauf aufweist.

12. Wasseraktivierbares Etikett nach einem der Ansprüche 1 bis 11, wobei die wasserabsorbierende Schicht auf dem Papiermaterial einen Druck darauf aufweist, und die Adhäsionsschicht das darauf beschichtete und durch Trocknen auf dem Druck verfestigte wässrige Haftmittel enthält.

13. Wasseraktivierbares Etikett nach Anspruch 11 oder 12, wobei der Druck aus UV-Siegel-Druck, UV-Flexographischer-Druck, UV-Rotations-Offsetdruck, UV-Siebdruck und UV-Tintenstrahldruck ausgewählt ist.

14. Wasseraktivierbares Etikett nach Anspruch 11, das ferner eine auf dem Druck bereitgestellte Ablöse-Lackschicht enthält.

15. Wasseraktivierbares Etikett nach einem der Ansprüche 1 bis 14, das auf einen Adhärenden appliziert ist, der aus der Gruppe ausgewählt ist, die aus einer Glasflasche, einer Töpfer- oder Porzellanflasche, einem Kunststoffbehältnis und einem Metallbehältnis besteht.

16. Verfahren zum Herstellen des wasseraktivierbaren Etiketts nach Anspruch 11, umfassend: Bedrucken der bedruckbaren Schicht des Papiermaterials, das auf einer Oberfläche desselben die poröse wasserabsorbierende Schicht und auf der anderen Oberfläche desselben eine bedruckbare Schicht aufweist; und innerhalb eines Druckvorgangs, Beschichten und Verfestigen durch Trocknen eines wässrigen Haftmittels auf der wasserabsorbierenden Schicht des Papiermaterials, um die Adhäsionsschicht bereitzustellen.

17. Adhärend mit einem Etikett, das das wasseraktivierbare Etikett nach Anspruch 15 enthält, das auf dem Adhärenden appliziert ist und eine Adhäsionskraft zwischen dem Etikett und dem Adhärenden von 200 bis 500 gf/15 mm nach Lagerung in einer Umgebung mit 25°C und 50 %RH für eine Woche aufweist, wobei die Adhäsionskraft wie in der Beschreibung unter der Überschrift "Anfängliche Adhäsionskraft des wasseraktivierbaren Etiketts zum Adhärenden" angegeben gemessen wird.

## Revendications

1. Etiquette activable par eau comprenant une feuille activable par eau **caractérisée en ce que** la feuille contient un matériau papier présentant sur au moins l'une de ces surfaces une couche poreuse absorbant l'eau ayant un volume d'absorption de liquide de 1 à 10 mL/m² déterminé selon JAPAN TAPPI No. 51:2000 (Test méthode No. 51:2000 pulpe de papier, méthode Bristow, Association japonaise technique de la pulpe et de l'industrie du papier), utilisant comme volume d'absorption de liquide une valeur mesurée avec un temps d'absorption de 2 secondes, une couche adhésive de revêtement étant disposée sur la couche absorbant l'eau and solidifiée par séchage, ladite couche adhésive étant prévue pour avoir une épaisseur de 0.1 à 30 g/m² sur la couche d'absorption de l'eau.

2. Etiquette activable par eau selon la revendication 1, dans laquelle la couche d'absorption d'eau contient un film étiré en résine contenant une résine thermoplastique et de la poudre inorganique fine qui présente une surface hydrophilisée, et est rendue poreuse par étirement.

3. Etiquette activable par eau selon la revendication 1 ou 2, dans laquelle la couche d'absorption d'eau contient un film étiré en résine qui contient de 30 à 80% en poids de résine polyoléfine et de 20 à 70% en poids de poudre de carbonate de calcium ayant un diamètre moyen de particule de 0.1 à 2 µm ayant une surface qui est hydrophilisée au moyen d'un tensioactif cationique, et est rendu poreux par étirement à une température inférieure au point de fusion de la résine polyoléfine.

4. Etiquette activable par eau selon la revendication 3, dans laquelle le tensioactif cationique est un copolymère cationique vinylique obtenu par copolymérisation d'un sel d'amine et un sel d'alkyldiallylamine et un monomère hdrophylique vinylique.

5. Etiquette activable par eau selon l'une quelconque des revendications 2 à 4, dans laquelle la couche d'absorption d'eau contient en outre une résine polyoléfine modifiée par acide.

6. Etiquette activable par eau selon l'une quelconque des revendications 1 à 5, dans laquelle la couche d'absorption d'eau présente une porosité allant de 20 à 55% et une épaisseur de 1 à 10 µm.

7. Etiquette activable par eau selon l'une quelconque des revendications 1 à 6, dans laquelle l'adhésif aqueux contient au moins un type sélectionné dans le groupe consistant en amidon et ses dérivés, pullulane, colle, gélatine, caséine, méthylcellulose, carboxyméthylcellulose, gomme arabique, gomme de tragacanthe, gomme de guar, alginate de sodium, alcool polyvinylique, éther polyvinylique, pyrrolidone polyvinylique, acide polyacrylique et ses sels, amide d'acide polyacrylique, ester polyacrylate, polyuréthane soluble dans l'eau et une résine d'acétate d'éthylène-vinylique.

8. Etiquette activable par eau selon l'une quelconque des revendications 1 à 7, dans laquelle la couche adhésive est prévue pour avoir une épaisseur allant de 1 à 25 g/m² sur la couche d'absorption d'eau.

9. Etiquette activable par eau selon l'une quelconque des revendications 1 à 8, dans laquelle la couche adhésive est prévue dans un motif ayant un rapport de surface allant de 30 à 95% sur la couche d'absorption d'eau, et le motif est sélectionné à partir de points, de rayures, un treillis et un tableau à damier.

10. Etiquette activable par eau selon l'une quelconque des revendications 1 à 9, dans laquelle la matériau en papier contient un film multicouche étiré en résine contenant un film étiré au moins bi-axialement, le volume d'absorption du liquide de la couche d'absorption d'eau allant de 1 à 6.2 mL/m², et la quantité de revêtement de l'adhésif aqueux allant de 1 à 10 g/m².

11. Etiquette activable par eau selon l'une quelconque des revendications 1 à 10, dans laquelle le matériau papier présente sur au moins une de ces surfaces la couche poreuse d'absorption d'eau et sur son autre surface une couche imprimable, ladite couche imprimable présentant une impression.

12. Etiquette activable par eau selon l'une quelconque des revendications 1 à 11, dans laquelle la couche d'absorption d'eau sur le matériau papier présente une impression, et la couche d'adhésif contient l'adhésif aqueux revêtu et solidifié par séchage sur l'impression.

13. Etiquette activable par eau selon l'une quelconque des revendications 1 à 12, dans laquelle l'impression est sélectionnée parmi l'impression d'étanchéité par UV, l'impression flexographique par UV, l'impression rotative offset par UV, la sérigraphie par UV et l'impression UV à jet d'encre.

14. Etiquette activable par eau selon l'une quelconque des revendications 1 à 13, contenant en outre une couche de vernis prévue sur l'impression.

15. Etiquette activable par eau selon l'une quelconque des revendications 1 à 14, appliqué sur un adhérent sélectionné dans le groupe consistant en bouteille en verre, bouteille en poterie ou en porcelaine, récipient en plastique et récipient en métal.

16. Procédé de fabrication de l'étiquette activable par eau selon la revendication 11, contenant : imprimer sur la couche d'impression du matériau papier ayant sur l'une de ces surfaces la couche d'absorption d'eau and sur l'autre surface une couche d'imprimable ; et selon un procédé d'impression, de revêtement et solidification par séchage un adhésif aqueux sur la couche d'absorption d'eau du matériau papier pour fournir la couche adhésive.

17. Adhérent présentant une étiquette, contenant l'étiquette activable par eau selon la revendication 15 appliquée sur ledit adhérent, et présentant une force d'adhésion entre l'étiquette et l'adhérent allant de 200 à 500 gf/15 mm après stockage dans un environnement à 25°C et 50%RH durant une semaine, la force d'adhésion étant mesurée comme indiquée dans la description selon l'intitulé « Force d'adhésion initiale d'étiquette activable par eau sur adhérent ».
